(19) **Europäisches Patentamt / European Patent Office / Office européen des brevets**

(11) **EP 4 641 408 A1**

(12) **EUROPEAN PATENT APPLICATION**

(43) Date of publication:
29.10.2025 Bulletin 2025/44

(21) Application number: 25170916.8

(22) Date of filing: 16.04.2025

(51) International Patent Classification (IPC):
*G06F 16/9032* (2019.01)    *G06F 16/9537* (2019.01)
*G06F 16/29* (2019.01)

(52) Cooperative Patent Classification (CPC):
**G06F 16/9537; G06F 16/29; G06F 16/90332**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 22.04.2024 US 202418642582

(71) Applicant: **Microsoft Technology Licensing, LLC
Redmond, WA 98052-6399 (US)**

(72) Inventors:
• ZHANG, Chiqun
  Redmond, 98052-6399 (US)
• YANKOV, Dragomir Dimitrov
  Redmond, 98052-6399 (US)
• WANG, Renzhong
  Redmond, 98052-6399 (US)

(74) Representative: **Murgitroyd & Company
165-169 Scotland Street
Glasgow G5 8PL (GB)**

(54) **CONTEXT-AWARE CONVERSATIONAL MAP FUNCTIONALITY**

(57) Various embodiments discussed herein relate to using one or more language models and/or mapping platforms to generate a response to a natural language question or command regarding geographical information associated with a mapping platform. In response to receiving such natural language question or command, some embodiments first extract contextual data. Based at least in part on the extracting of the contextual data, various embodiments then provide the contextual data and the natural language command or question as input into one or more language models such that the one or more language models and/or mapping platforms generate a response. Some embodiments then cause presentation of an indication associated with the response.

FIG. 2

**Description**

**BACKGROUND OF THE INVENTION**

Digital map services and applications have revolutionized the way individuals navigate, explore, and interact with geographical information. These mapping technologies offer a comprehensive suite of features designed to facilitate seamless navigation, location search, and exploration. For example, some of these mapping technologies allow users to access various map views, including satellite imagery and 360-degree street-level panoramas, thereby enabling an immersive exploration of locations. In another example, some of these mapping technologies also compute detailed directions for multiple modes of transportation, real-time traffic updates, and integration with public transit systems, empowering users to plan and optimize their routes efficiently.

SUMMARY OF THE INVENTION

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.
Various embodiments discussed herein relate to using one or more language models (e.g., a Large Language Model (LLM)) to generate a response to a natural language question or command regarding geographical information associated with a mapping platform (e.g., a mapping service, such as BING Maps). In operation, in response to receiving such natural language question or command, some embodiments first extract contextual data. For example, contextual data may include user information (e.g., user preferences) derived from one or more previous turns that are part of a same (and/or prior) conversation as the natural language question or command or derived from historical conversations. Alternatively or additionally, the contextual data may include a clarifying question that a language model generates in response to a prior turn in the same (and/or prior) conversation as the natural language question or command. Alternatively or additionally, the contextual data may include information in the natural language question or command itself, such as spatial constraints (e.g., locations a user requests to stop at) and/or temporal constraints (e.g., a temporal stop order the user wishes to traverse the locations at).
Based at least in part on the extracting of the contextual data, various embodiments then provide the contextual data and the natural language command or question as input into one or more language models such that the one or more language models and/or mapping platform generate a response. For example, such response may include a clarifying question generated in response to the natural language question or command, an enriched prompt (e.g., supplemental information incorporated into the natural language question or command), and/or a response to the natural language question or command (e.g., a natural language sentence describing a fastest route to a location specified in the natural language question or command).
Some embodiments then cause presentation (e.g., at a map interface associated with the mapping platform) of an indication associated with the response. For example, in addition to displaying the language model's generated response, particular embodiments may superimpose or highlight a series of roads indicative of a route or directions to a location.
In light of various mapping technologies, various embodiments have the technical effect of at least improved Natural Language Understanding (NLU), information retrieval accuracy in handling ambiguity (e.g., in queries), reduced input/output (I/O) with respect to less complexity in query formulation, more flexibility, and information retrieval accuracy due to no (or less) dependency on structured data, as described in more detail below.

BRIEF DESCRIPTION OF THE DRAWING

The present invention is described in detail below with reference to the attached drawing figures, wherein:

FIG. 1 is a block diagram depicting an example computing system architecture suitable for implementing some embodiments of the disclosure;
FIG. 2 is a block diagram of an example high level workflow of a contextual-aware map search system, according to some embodiments;
FIG. 3 is a block diagram illustrating how user information is extracted and how an enriched query/prompt is generated from an example conversation, according to some embodiments;
FIG. 4 is a block diagram illustrating a pipeline integrating constraint understanding through a language model with subsequent algorithmic components implementing the constraints, according to some embodiments;
FIG. 5 is a block diagram of an automated pipeline to evaluate conversations within a simulated user interaction environment, leveraging three language models, according to some embodiments;

FIG. 6 is a block diagram of a Large Language Model that uses particular natural language input(s) to generate corresponding natural language output(s), according to some embodiments;

FIG. 7 is a schematic diagram illustrating a conversation between a vehicle operator and a conversational assistant, according to some embodiments;

FIG. 8 is a flow diagram of an example process for prompt engineering multiple language models, according to some embodiments;

FIG. 9 is a flow diagram of an example process for generating a language model response based on contextual data and a natural language question or command, according to some embodiments;

FIG. 10 is a block diagram illustrating an example operating environment suitable for implementing some embodiments of the disclosure; and

FIG. 11 is a block diagram of an example computing device suitable for use in implementing some embodiments described herein.

## DETAILED DESCRIPTION OF THE INVENTION

The subject matter of aspects of the present disclosure is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described. Each method described herein may comprise a computing process that may be performed using any combination of hardware, firmware, and/or software. For instance, various functions may be carried out by a processor executing instructions stored in memory. The methods may also be embodied as computer-usable instructions stored on computer storage media. The methods may be provided by a stand-alone application, a service or hosted service (stand-alone or in combination with another hosted service), or a plug-in to another product, to name a few.

As described above, mapping technologies offer a comprehensive suite of features designed to facilitate seamless navigation, location search, and exploration. However, existing map search engines of these mapping technologies are designed as semi-structured information retrieval systems. Accordingly, these systems are configured to process input queries containing only short snippets of text (e.g., user source location and desired destination) and a viewport (e.g., a portion of a map that is currently visible or displayed on the screen of a device). Map search engines enable users to find specific locations, addresses, businesses, landmarks, and/or or points of interest on the map. In an illustrative example, a map search engine field may receive a user query indicative of a destination address the user desires to visit. The mapping service may then calculate the user's location and multiple routes based on current traffic conditions, distance, and estimated travel time. It may then display the different route options on a map, along with the estimated time it will take to reach the destination via each route. Once a route is selected, the mapping service may then provide vehicle turn-by-turn navigation instructions, including which roads to take, when to turn, and any potential obstacles or delays along the way.

There are several technical problems with these mapping semi-structured information retrieval systems. The first problem is limited natural language understanding (NLU), which negatively impacts the accuracy of information retrieval. Mapping semi-structured information retrieval systems typically rely on structured queries or keyword searches. They often lack the ability to process or understand natural language sequences in the same way humans do. This can lead to limitations in interpreting user intent and context. In an example, "User intent" or "Intent" refers to the underlying purpose or goal behind a user's message or query. It represents what the user is trying to accomplish or the action they want a conversational assistant to perform. Accordingly, because these mapping technologies are limited in NLU to interpret user intent, the retrieval accuracy is negatively impacted.

Another related technical problem is that these mapping semi-structured information retrieval system have limited ability to handle ambiguity. Semi-structured systems struggle with ambiguous queries or those with multiple interpretations. Without sophisticated natural language processing (NLP) capabilities, they do not effectively disambiguate user queries or provide relevant results in such cases. For example, a query like "best coffee shop" may yield different results depending on factors like the user's location, preferences, and the current time of day. While mapping technologies may attempt to infer user intent, they do not always effectively disambiguate ambiguous queries.

Thirdly, there is complexity in query formulation, leading to reduced retrieval accuracy and increased input/output (I/O). Users typically need to understand the structure of the underlying mapping technology interface and formulate queries accordingly. Mapping technologies have their own query syntax and search conventions that users need to understand to effectively use the service. This includes knowing how to structure queries, use filters and modifiers, and interpret search results. Users who are not familiar with the mapping platform's query syntax may struggle to find what they are looking for or may not utilize the platform's full range of features and capabilities. For example, users may need to enter the exact name of a place or use specific location-based terms to find what they are looking for. What this means is that there is more likely to be information retrieval accuracy errors and unnecessary computer input/output (I/O), leading to, for example, extensive heat generation and wear and tear on storage components (e.g., a read/write head). For example, the user may have to repeatedly formulate a query to input the exact name of a business according to the syntax recognized by the mapping technologies to generate a correct result, which unnecessarily multiplies computer I/O.

Another technical problem is low flexibility. These systems often require users to adhere to predefined search categories, filters, or templates when looking for information. This limits the flexibility of users in freely expressing their information needs. While it offers a variety of search options, users may find it less flexible. For example, some user interfaces of mapping technologies include a simple text field where the user can only enter a source or destination address, along with a select small quantity of additional filters. For instance, users can apply filters to narrow down search results based on specific categories such as restaurants, hotels, gas stations, or pharmacies only. But the user may desire to apply more filters or otherwise find more information than the platform allows. Accordingly, these technologies and corresponding user interfaces are not flexible, which consequently negatively impacts the user experience.

Another technical problem is that these mapping technologies have a heavy dependency on structured data. These mapping technologies rely on structured and semi-structured data related to locations, businesses, and geographic features. While it excels at retrieving information from its extensive database of mapped locations, it faces limitations when dealing with unstructured data or niche queries that fall outside its indexed content. Users searching for niche locations or obscure points of interest, for example, may find that mapping technologies lack detailed information or may even fail to recognize the place altogether if no indexes are built for the searched locations. This leads to inaccuracies in search results or navigation directions, frustrating users who rely on the mapping service for up-to-date and reliable information.

Various embodiments of the present disclosure provide one or more technical solutions that have technical effects in light of these technical problems, as well as other problems, as described herein. Specifically, various embodiments relate to using one or more language models (e.g., a Large Language Model (LLM)) to generate a response to a natural language question or command regarding geographical information associated with a mapping platform. For example, a user may first issue a natural language command, such as "find the closest store A location nearest gas station C." In another example, a natural language command may be to "find the fastest route to address A." In another example, a natural language question may be, "Does road D have a lot of traffic right now?"

In response to receiving an indication of such natural language question or command, some embodiments then extract contextual data. For example, contextual data may refer to user information generated prior to receiving the indication. For instance, the user information may refer to information from one or more previous turns that are part of a same conversation as the natural language question or command. In other words, the natural language question or command may be a part of a series of other natural language commands or questions of the same conversation and the entire conversation leading up to the natural language question or command may be used as contextual data. For example, a previous natural language command that is contextual data may be "give me directions to store A," which represents a first turn. The user (either in response to a model-generated response or the first turn) may then say "In city B," which is a second turn after the first turn representing the indication of the natural language question or command. Accordingly, in some embodiments, the model may use "give me directions to store A" as context to infer the intent of the phrase "In city B" to mean that the use wants direction to store A within city B.

In another example, user information additionally or alternatively includes any user preferences, such as preferences to drive on major interstates, highways, and free-ways and preferences to avoid driving on two-lane roads, as extracted from one or more data sources (e.g., previous conversations, chats, emails, texts, social media threads, registration database, etc.). Other user preferences may include not driving on dirt roads, preferences to drive on "scenic" routes, and the like.

In some embodiments, contextual data includes one or more spatial or temporal constrains within the natural language question or command itself. For example, a spatial constraint may specify one or more geographic locations a user asks to stop at. For instance, for the command "go to C from A, while stopping in between at B," the spatial constraints may be locations C, A, and B. In another example, temporal constraints may include an order or time that the user asks to stop at such geographical locations. Using the illustration above, the temporal constraint is to start at A, then stop at B, then stop at C.

In some embodiments, contextual data includes context from an output generated by one or more language models. For example, such output may include a clarifying question that an LLM generates in response to a prior turn in a user question or command. For example, using the illustration above, where a user utters "give me directions to store A," the clarifying question may be, "There are 5 store A's by you. Do you want the closest one?" Such phrase may be used as contextual data for future user questions or commands, such as "I'll be in city B," as described in more detail below.

Based at least in part on the extracting of the contextual data, various embodiments then provide the contextual data and natural language command or question as input into one or more language models such that the one or more language models and/or mapping platforms generate a response (e.g., an enriched prompt, a clarifying question, or an answer to the question/command). For example, using the illustration above, the LLM may use its previous clarifying question ("There are 5 store A's by you. Do you want the closest one?") as contextual data and input in order to generate a response, such as, "okay, there is only 1 store A in city B so I'll prepare a route to store A in city B."

Some embodiments then cause presentation (e.g., at a map interface associated with the mapping platform) of an indication associated with the response to the natural language question or command. For example, the LLM may generate an output that identifies each entity way point, and the like in a user command, which is then passed to a mapping service's optimization functions to, for example, compute candidate routes to a location. Then, using the illustration above, in addition to displaying the LLM-generated response, particular embodiments may superimpose or highlight a series of roads indicative of a route or directions to store A in city B.

Various embodiments have the technical effect of improved NLU relative to existing mapping technologies. This is because users can ask questions or provide commands in natural language, without needing to adhere to specific query structures or keywords like existing mapping technologies. This flexibility allows users to interact with the mapping platform more naturally, mimicking human conversation. Various embodiments leverage advanced natural language processing functionality via one or more language models to understand user intent, context, and even colloquial language, not only leading to a more intuitive user experience but improved retrieval accuracy. Accordingly, one technical solution is the ability to process natural language questions or commands via a language model, which existing mapping technologies do not currently do.

A related technical effect is information retrieval accuracy with respect to handling ambiguity. This is because embodiments are better able to determine intent. One technical solution is the ability of engaging in interactive dialogues with users to clarify their intent and refine their queries. For example, a language model may ask a clarifying question to the user when the user merely inputs a city destination. For instance, in response to the user merely inputting a phrase, "go to city A," a language model may generate a clarifying question, such as "City A is a city in two states. Are you referring to state B or state C?" Other technical solutions include the ability of embodiments to extract contextual data (to better determine intent and otherwise formulate accurate responses) or provide enriched queries/prompts based on such contextual data. Contextual data, such as different turns in a natural language command, previous natural language commands, and/or user preferences allow embodiments to correctly infer what the intent is. For example, using the illustration above, if various past conversations specified city A with respect to state B, then the intent may be to derive directions in city A in state B (not state C). Through context-awareness (via contextual data) and conversation history, various embodiments can better understand ambiguous queries and provide more accurate and relevant responses (e.g., enriched queries or prompts). Users can also provide additional context or natural language feedback during the conversation, allowing various embodiments to adapt and refine its responses accordingly.

Another technical effect is improved retrieval accuracy and reduced I/O with respect to less complexity in query formulation. Various embodiments abstract away the complexity of query formulation by allowing users to express their information needs in plain natural language. Users thus do not need to understand the intricacies of the mapping platform's query syntax, schema, or data structure. Instead, users can simply ask questions or issue commands using natural language, making the mapping platform more accessible to a wider range of users, including those who may not be tech-savvy with respect to the specific mapping platform. Using the example above, for instance, even if a user does not type in the exact name of a place or use specific location-based terms to find what they are looking for, various embodiments still retrieve the correct results because they employ the technical solution of performing natural language processing or otherwise use a language model. This means that there is less likely to be information retrieval accuracy errors and unnecessary computer input/output (I/O). This is because instead of the user having to repeatedly input multiple different queries to obtain correct results based on the required schema or syntax of the mapping platform, the user needs to only input a single (or fewer) query that is processed via a language model, thereby reducing computer I/O.

Another technical effect is more flexibility relative to existing mapping technologies. This is because various embodiments allow users to engage in open-ended conversations and ask a wide variety of questions. Users are not limited to predefined search categories or filters, and they can explore information in a more exploratory and conversational manner. This adaptability makes it easier for users to discover new places, get personalized recommendations, and engage more deeply with the mapping service. Using the example above, for instance, even if a user interface of a mapping technology only allowed users to apply a few select filters (e.g., restaurants, hotels, gas stations, ATMs, or pharmacies) to narrow down search results, the user would still be able to effectively express additional filters intuitively in a natural language question or command. Accordingly, a technical solution is the ability to process natural language commands or questions via a language model. Accordingly, various embodiments, including user interfaces, are more flexible, which consequently improves the user experience.

Another technical effect is retrieval accuracy because there is no heavy dependency on structured data in some embodiments. While existing mapping semi-structured information retrieval systems rely on structured or semi-structured data, various embodiments leverage a wider range of data sources, including unstructured text and/or user data or preferences. Examples of unstructured text include paragraphs from articles or books, comments on social media posts, email messages, chat transcripts, product reviews, or news articles. This allows embodiments to provide more comprehensive and personalized responses, incorporating information from diverse sources beyond the mapping service's database. As a result, users can receive richer and more contextually relevant information, enhancing retrieval accuracy and the user's overall experience.

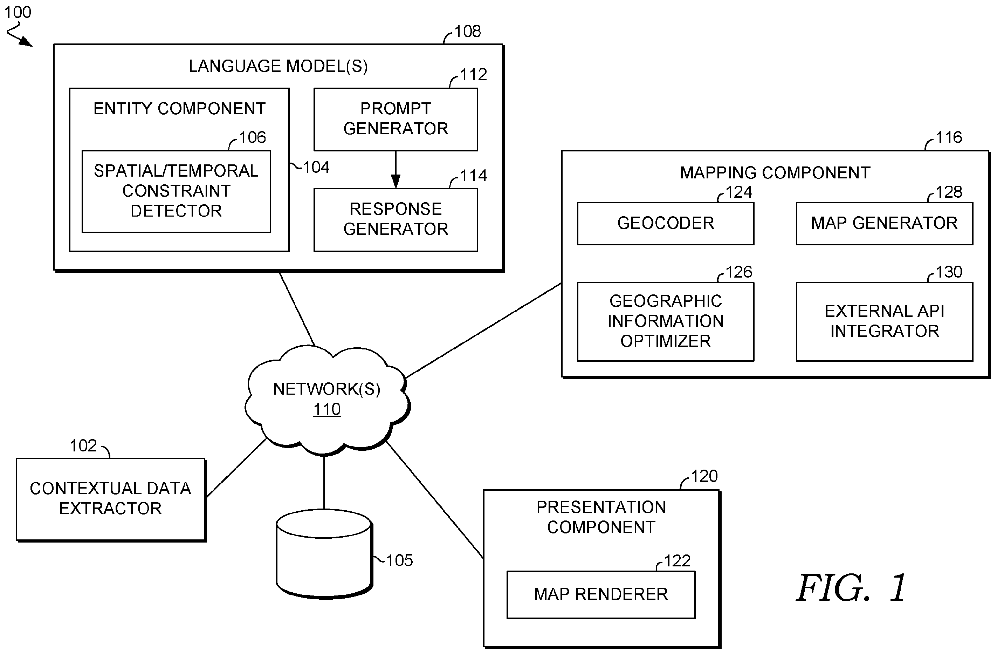

Turning now to FIG. 1, a block diagram is provided showing aspects of an example computing system architecture suitable for implementing some embodiments of the disclosure and designated generally as system 100. The system 100 represents only one example of a suitable computing system architecture. Other arrangements and elements can be used in addition to or instead of those shown, and some elements may be omitted altogether for the sake of clarity. Further, as with system 100, many of the elements described herein are functional entities that are implemented as discrete or distributed components or in conjunction with other components, and in any suitable combination and location according to various embodiments.

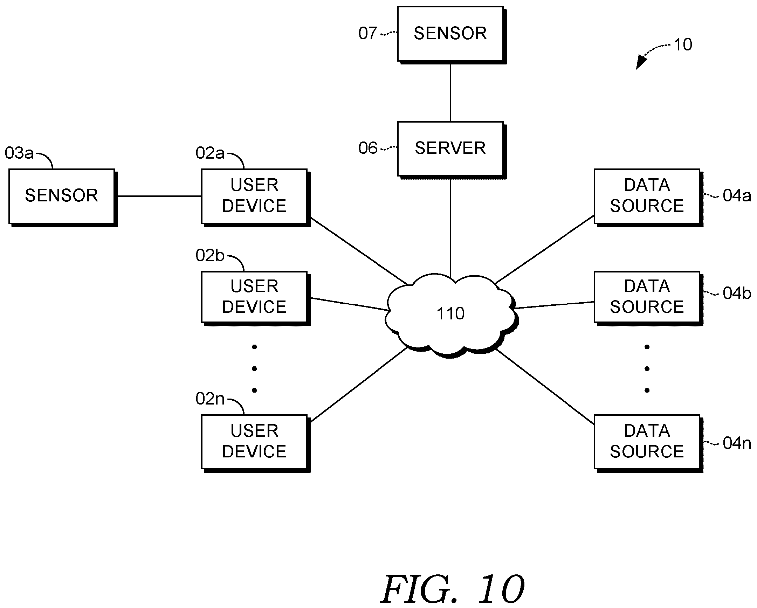

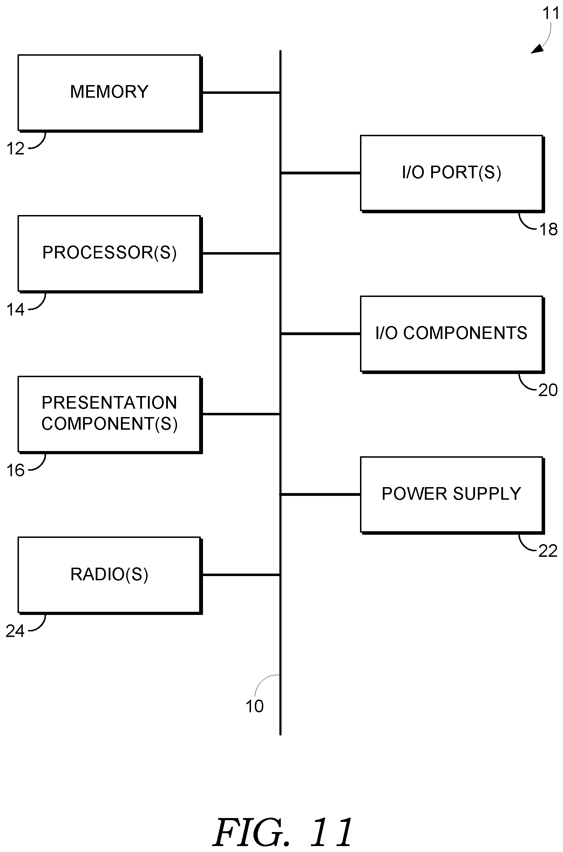

Example system 100 includes network(s) 110, which is described in connection to FIG. 10, and which communicatively couples components of system 100 including a contextual data extractor 102, one or more language models 108, a mapping component 116, a presentation component 120, and storage 105. The system 100 is generally responsible for using the one or more language models 108 to generate a response associated with geographical information and a mapping platform. In some embodiments, these components in the system 100 are embodied as a set of hardware circuitry components (e.g., a hardware accelerator, such as a GPU AI hardware accelerator), compiled computer instructions or functions, program modules, computer software services, a combination thereof, or an arrangement of processes carried out on one or more computer systems, such as computing device 11 described in connection to FIG. 11, and the user device 02a and/or the server 06 of FIG. 10, for example.

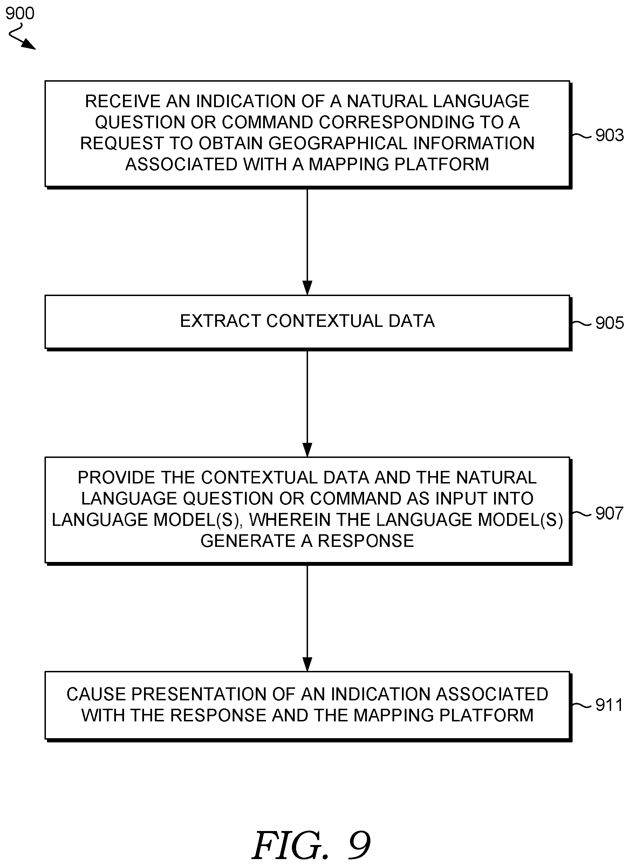

In some embodiments, the functions performed by components of system 100 are associated with one or more personal assistant applications, services, or routines. In particular, such applications, services, or routines can operate on one or more user devices (such as user device 02a of FIG. 9), servers (such as server 06 of FIG. 10), can be distributed across one or more user devices and servers, or be implemented in the cloud. Moreover, in some embodiments, these components of system 100 are distributed across a network, including one or more servers (such as server 06 of FIG. 10) and client devices (such as user device 02a of FIG. 10), in the cloud, or reside on a user device, such as user device 02a of FIG. 10. Moreover, these components, functions performed by these components, or services carried out by these components are implemented at appropriate abstraction layer(s) such as the operating system layer, application layer, and/or hardware layer of the computing system(s). Alternatively, or in addition, in some embodiments, the functionality of these components and/or the embodiments described herein are performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), and Complex Programmable Logic Devices (CPLDs). Additionally, although functionality is described herein with regards to specific components shown in example system 100, it is contemplated that in some embodiments functionality of these components are shared or distributed across other components.

In some embodiments, each of the active components of the system 100 perform their functionality at runtime or after a machine learning model has been deployed. However, it is understood that at least some of the components of the system 100 can additionally or alternatively perform their functionality in training, testing, fine-tuning, and/or offline environments.

Continuing with FIG. 1, the contextual data extractor 102 is generally responsible for extracting or determining contextual data. Contextual data can be any set of data or metadata associated with a currently received natural language question or command. For example, where the contextual data is user information, such as user preferences, the contextual data extractor 102 may access storage 105 (e.g., a database) to retrieve one or more data records that include the user preferences. For instance a user may have downloaded a mapping consumer application from a mapping platform. Responsively, such mapping platform may request that the user directly register or state their preferences with respect to the mapping platform or other geographical information. For example, a user may input names of preferred roads to use while traveling, types of roads (e.g., Interstates, as opposed to dirt roads), scenic routes, preferred locations to visit, or the like, which is then stored as a data record in storage 105. Alternatively or additionally, the contextual data extractor 102 may access storage 105 to retrieve data records of past natural language commands or questions issued by the user that indicate the user's preferences. For example, user preferences may have been indicated in current or past conversations between the same user and a conversational assistant or other language model capable of generating text.

In some embodiments, the contextual data extractor 102 additionally or alternatively extracts contextual data from an output generated by the one or more language models 108. For example, each time the output generator 114 generates a response, such response may be stored to a data record in the storage 105 so that the contextual data extractor 102 may extract such data record to use as contextual data for the language model(s) 108 at a later time. For example, such response may include a clarifying question that the one or more language models 108 generate. In some embodiments, the contextual data extractor 102 additionally or alternatively extracts contextual data from a current natural language command or question. For example, in some embodiments, the contextual data extractor represents or includes components identical to the entity component 104 and the spatial/temporal constraint detector 106. Accordingly, the contextual data extractor 102 may detect one or more spatial and/or temporal constrains in the natural language command or question and then programmatically return such results to the language model(s) 108 so that the results can be used as input into the language model(s) 108.

The language model(s) 108 is generally responsible for performing Natural Language Processing (NLP) (e.g., via NER) by taking, as input, one or more natural language questions or commands issued by a user, data from the contextual data extractor 102, and/or entities detected by the entity component 104 to generate a response (e.g., natural language characters responsive to the one or more natural language questions or commands). In some embodiments, the language model(s) 108 represents one or more machine learning models or other models that perform NLP. In some embodiments, a "language model" is a set of statistical or probabilistic functions that (e.g., collectively) performs Natural Language Processing (NLP) in order to understand, learn, and/or generate human natural language content. For example, a language model may be a tool that determines the probability of a given sequence of words occurring in a sentence (e.g., via Next Sentence Prediction (NSP) or MLM) or natural language sequence. Simply put, it may be a tool that is pre-trained to predict the next word in a sentence or other natural language character set. However, instead of predicting the next word in a sentence, the language model(s) 108 may be trained, tuned, or prompted to generate responses to user questions or commands associated with geographical information, as described in more detail below.

A language model is referred to as a "large" language model ("LLM") when it is trained on enormous amounts of data. Some examples of LLMs are GOOGLE's BERT and OpenAI's family of generative pre-trained transformer (GPT) networks, which include GPT-2, GPT-3, and GPT-4. GPT-3, for example, includes 175 billion parameters trained on 570 gigabytes of text. These models have capabilities ranging from writing a simple essay to generating complex computer codes - all with limited to no supervision. Accordingly, an LLM is a deep neural network that is very large (e.g., billions to trillions of parameters) and understands, processes, and produces human natural language from being trained on massive amounts of text. These models predict future words in a sentence based on sentences in the corpus of text they were trained on, allowing them to generate sentences which can be similar to how humans talk and write. In some embodiments, the LLM is pre-trained (e.g., via NSP and MLM on a natural language corpus to learn English), prompt-tuned, fine-tuned, and/or functions via prompt engineering, as described in more detail below.

The language model(s) 108 includes an entity component 104, a prompt generator 112, and an output generator 114. The entity component 104 includes a spatial/temporal constraint detector 106. The entity component 104 is generally responsible for detecting one or more entities in a natural language question, command, or other dataset. For example, in some embodiments, the entity component 104 detects entities via Named Entity Recognition (NER). NER is an information extraction Natural Language Processing (NLP) technique that identifies and classifies tokens/words or "entities" in natural language text into predefined categories. Such predefined categories may be indicated in corresponding tags or labels. Entities can be, for example, specific roads, names of people, specific organizations (e.g., restaurants), specific locations or landmarks, specific roads, specific times, specific quantities, specific monetary price values, specific music, and the like. Likewise, the corresponding tags or labels can be specific people, organizations, location, time, price (or other invoice data) and the like. NER and/or other NLP functionality can be used to understand and summarize natural language, such as tokenization (breaking text into words or phrases), stemming (reducing words to their base form), and part-of-speech tagging (identifying the grammatical role of words), semantic analysis (to derive meaning of a first word based on context/meaning of other words by the first word), and/or syntactic analysis (detecting the grammatical structure of a sentence or a sequence of words to determine its syntactic structure, or understand how words are organized in a sentence and how they relate to each other in terms of grammatical rules).

The entity component 104 includes the spatial/temporal constraint detector 106. The spatial/temporal constraint detector 106 is generally responsible for detecting one or more entities corresponding to one or more geographical locations and temporal constraints associated with such geographical locations. For example, if a user asks for directions between two places, the spatial/temporal constraint detector 106 can extract these locations and help determine the spatial boundaries within which the mapping platform needs to operate. In another example, if a user inputs "Find coffee shops near Central Park," the spatial/temporal constraint detector 106 can identify "Central Park" as a location entity. By recognizing location entities, the mapping component 116 (or more specifically the geocoder 124) can infer geo-spatial constraints associated with the geographic information optimizer 126, as described in more detail below.

The spatial/temporal constraint detector 106 can also recognize temporal entities such as dates, times, and durations from user natural language commands or questions. This allows the mapping component 116 to understand temporal constraints associated with certain requests. For instance, if a user asks for "Traffic conditions on I-95 tomorrow morning," the spatial/temporal constraint detector 106 can extract "tomorrow morning" as a temporal entity, providing the mapping component 116 with the necessary time frame for providing relevant information.

The spatial/temporal constraint detector 106 can continuously parse incoming user questions or commands to identify any changes in geo-spatial or temporal constraints. This enables the mapping component 116 to dynamically adjust its responses based on real-time data and user inputs. For example, if a user asks for "Events happening near me this weekend," the spatial/temporal constrain detector 106 can extract the temporal constraint "this weekend" and retrieve relevant event information accordingly.

The language model(s) 108 further includes a prompt generator 112 and an output generator 114. The prompt generator 112 is responsible for generating (e.g., automatically) and/or assembling one or more natural language prompts/queries based on information extracted by the entity component 104, contextual data extracted via the contextual data extractor 102, and/or generating other data to be incorporated into a prompt (e.g., a 1-shot or few-shot example). The prompt generator 112 provides the prompt as input into the language model(s) 108, which is used as input by the output generator 114 to generate a response. The output generator 114 generates one or more natural language characters, which is responsive to processing the prompt assembled by the prompt generator 112.

In some embodiments, the prompt assembled by the prompt generator 112 includes a zero-shot, one-shot, or few-shot examples of representative input-output pairs (e.g., a user-issued natural language question (input) and answer (output) pairs). As described herein, in some embodiments, an "example" refers to one or more model (e.g., representative or exemplary) inputs and/or outputs, where the output at least partially indicates how the response should be formatted (e.g., via sentence structure or syntax, word choices, length (e.g., number of words) in the output, etc.) according to an example input. In some embodiments, an "example" refers to natural language content that a model uses as a guide for structuring or styling its output, and the model typically does not use the example as a guide for deriving substantive natural language text (e.g., the subject or object in a sentence) in the example to copy over to the output. For instance, if a user-issued natural language command contains the phrase, "give me the directions to location A," an example is an input-output pair, such as "location A destination" (the example input) and "first, go to street 123, then street 456..." (the example output).

In some embodiments, the prompt assembled by the prompt generator 112 additionally or alternatively includes any of the data extracted by the contextual data extractor 102, such as previous turns in a conversation, previous conversations (both generated by the output generator 114 and users), or user preferences (e.g., a user preference to drive on certain types of roads or user preferences to avoid certain weather). In some embodiments, the prompt assembled by the prompt generator 112 additionally or alternatively includes any of the data extracted by the entity component 104, such as spatial and/or temporal constraints.

In some embodiments, the prompt generator 112 programmatically calls the mapping component 116 to receive information (e.g., via the map generator 128) to package in a prompt. For example, in some embodiments, the map generator 128 returns a "viewport" to additionally or alternatively be assembled, by the prompt generator 112, within the prompt.

In some embodiments, and as described in more detail herein, the prompt assembled by the prompt generator 112 represents "hard" and/or "soft" prompts. For example, a prompt template (e.g., a "hard" prompt) may be used at runtime or when the model is deployed. A prompt template is a pre-written text that may be placed before (or used with) a user's natural language question or command input to guide the model to perform a specific task or generate a desired output. For example, a prompt template for summarizing a navigational journey could include a user question, such as "what are the directions to location A" and the prompt template, which says, "summary" or "Please write a short summary telling the user the quickest way to get to location A." In some embodiments, such templates leave certain words in the prompt template blank because the blank space may depend on the use case provided by the runtime prompt. For example, the template may read, "give me an update of the weather every_hours..." Such templates may be performed based on performing NLP of the user's input to map it to the correct template.

The language model(s) 108 ingests the prompt and responsively generates, via the output generator 114, an output, such as an enriched prompt (described below), a natural language question in response to a user-issued question, and/or an answer in response to the user-issued question. For example, a prompt (assembled by the prompt generator 112) may include a user command such as "take me to address XYZ," contextual data such as user preferences that the user likes scenic routes, and previous turns in the same conversation where the user indicated his travel will be via bike. The prompt may further include spatial entity data, such as XYZ. The prompt may then be fed to the language model(s) 108 and the output generator 114 may responsively generate an output responsive to the prompt such as "the fastest scenic route via bike will be following the directions below to arrive at location XYY."

The mapping component 116 is generally responsible for generating map, route, and/or location data associated with a user's natural language command or question and geographical information. The mapping component 116 includes a geocoder 124, a geographic information optimizer 126, a map generator 128, and an external API integrator 130.

In some embodiments, the geocoder 124 is generally responsible for translating or converting addresses or other identifiers of other geographical locations (e.g., names of stores) detected by the spatial/temporal constraint detector 106 into geographic coordinates (latitude and longitude) that can be understood by the mapping component 116. It involves converting textual location descriptions into precise geographic coordinates on the Earth's surface. In some embodiments, the geocoder 124 automatically detects a user device's location via Global Position System (GPS) functionality or the like (e.g., even if the user does not include the user's location in a question or command).

In an illustrative example, the geocoder 124 may first programmatically call the spatial/temporal constraint detector 106 to retrieve each geographic location entity. For example, the spatial/temporal constraint detector 106 may first break a natural language command down into its individual components, such as street name, city, state, postal code, and country. This parsing ensures that the geocoder 124 can interpret and process each part of the address accurately. Responsively, the geocoder 124 may access storage 105 (e.g., a large database), which includes mapping data, such as streets, cities, and points of interest. This data may come from various sources, including government agencies, commercial providers, and crowd-sourced platforms. The geocoder 124 may then attempts to match the parsed address against the data in its database to find a corresponding geographic location. It may use various matching algorithms (e.g., via fuzzy matching or spatial indexing, such as R-trees) to find the best match, taking into account factors such as spelling variations, abbreviations, and proximity to known landmarks. Once a match is found, in some embodiments the geocoder 124 assigns geographic coordinates (latitude and longitude) to the address based on the location information stored in storage 105. These coordinates represent the precise position of the address on the Earth's surface. In some embodiments, the geocoder 124 provides a measure of the accuracy or reliability of the geocoded result. This quality assessment may include indicators such as the confidence level of the match, the precision of the coordinates, and any potential discrepancies or ambiguities in the input address. In some embodiments, the geocoder 124 lastly returns the geocoded result to a user device in a standardized format, such as a JSON or XML response, and/or returns the result to the geographic information optimizer 126, and/or returns this information as an input to the language model(s) 108. This output may include the latitude and longitude coordinates of the geocoded location, along with additional metadata such as the address components and quality indicators.

The geographic information optimizer 126 is generally responsible for calculating one or more routes, directions, distance (e.g., in miles) to a location, or the like based on the geographical information detected by the geocoder 124. For example, in some embodiments the geographic information optimizer 126 calculates the best route between two or more points based on various factors such as distance, traffic conditions, and contextual data extracted by the contextual data extractor 102 (e.g., user preferences, such as preferred road types). The geographic information optimizer 126 may thus determine the optimal path for navigation. For example, the geographic information optimizer may use Dijkstra's algorithm. The algorithm starts by initializing a priority queue (e.g., implemented using a heap data structure) to store nodes and their associated costs. It assigns a cost of zero to the starting node and infinity to all other nodes. The algorithm iteratively explores neighboring nodes of the current node, updating their costs if a shorter path is found. It selects the node with the lowest cost from the priority queue for exploration. For each neighboring node of the current node, Dijkstra's algorithm computes the total cost of reaching that node from the starting node through the current node. If this cost is lower than the current cost associated with the neighboring node, the algorithm updates the neighbor's cost and predecessor accordingly. The algorithm continues exploring nodes and updating costs until all reachable nodes have been visited or until the destination node is reached. Once the destination node is reached, the algorithm terminates, and the shortest path from the starting node to the destination node is reconstructed by following the predecessor pointers. Various embodiments optimize Dijkstra's algorithm by incorporating additional factors such any of the data contained in the contextual data extractor 102, real-time traffic data, and/or the like. This algorithm dynamically adjusts the cost of edges (roads) based on these factors to calculate more accurate and efficient routes.

In some embodiments, the geographic information optimizer 126 may perform alternative or additional algorithms depending on the user-initiated question or command. For example, a user command may not necessarily request directions or a route to a location. Rather, the user may ask questions, such as "show me on the map where closest store A is located" or "where is the nearest hospital?" or "what are the road conditions like in city A?" Accordingly, various other optimization algorithms may use relevance ranking, collaborative filtering, content-based filtering, location-based recommendations, or temporal recommendations. The relevance ranking algorithm prioritizes search results based on relevance to the user's command or question. It considers factors such as the similarity of the location's name or description to the user's question/command terms, the popularity of the location, and its proximity to the user's current location. Collaborative filtering algorithms analyze the preferences and behaviors of similar users to recommend locations that are likely to be of interest to the current user. They leverage historical data on user interactions, such as ratings, reviews, and past search queries or the like, to generate personalized recommendations.

Content-based filtering algorithms recommend locations (e.g., restaurants) based on their attributes and features, such as cuisine type, price range, ambiance, and special dietary options. They match the user's preferences with the characteristics of locations to identify the most suitable options. Location-based recommendation algorithms prioritize locations based on their proximity to the user device's current location or a specified location. They consider factors such as distance, travel time, and mode of transportation to recommend nearby locations that are convenient for the user to visit. Temporal recommendation algorithms take into account temporal factors, such as the time of day, day of the week, and current events, to recommend locations that are relevant to the user's context. For example, they may suggest brunch places on weekends or late-night eateries during the evening.

In another example, the user's command may be to "find the closest store A location." In this example, distance-based searched algorithms may be used to utilize spatial indexing techniques like quad trees or R-trees to efficiently search for the nearest store A to the user's location. This algorithm calculates the distance between the user's location and all stores in the database, selecting the one with the shortest distance. Hierarchical clustering may be used to group stores into clusters based on geographic proximity, then identify the cluster closest to the user's location. Within the selected cluster, some embodiments then refine the search to find the nearest individual store. Some embodiments precompute distances between store locations and popular user locations to accelerate the search process. Update these precomputed distances periodically to reflect changes in store locations or user preferences.

The map generator 128 is generally responsible for generating one or more maps and associated data for display by the map renderer 122. For example, the map generator 128 may first acquire the geographic data needed to generate the map based on making a programmatic call to the geocoder 124, the external API integrator 130, and/or storage 105. This data may include information about roads, landmarks, bodies of water, political boundaries, and other geographical features. In some embodiments, the map data is sourced from various providers, including governmental agencies, commercial vendors, and crowd-sourced platforms (as accessed via the external API integrator). Once the map data is acquired, some embodiments perform preprocessing to optimize it for rendering. This may involve simplifying geometries, reducing data resolution, and organizing the data into spatial data structures, such as quad trees or R-trees, for efficient querying and retrieval, or the like.

The external API integrator 130 is generally responsible for integrating with external APIs (Application Programming Interfaces) of other host systems (e.g., cloud nodes or servers) to provide additional functionalities such as location-based services, weather information, points of interest, traffic data, satellite imagery, and business listings. For example, the mapping platform may then register with the external APIs they wish to integrate and obtain API keys or authentication tokens. These credentials are used to authenticate requests sent to the external API servers, ensuring secure access to the API endpoints.

When a user issues a command or question that requires data or functionality from an external API (e.g., searching for nearby restaurants or displaying weather information), the mapping service constructs an API request with the necessary parameters and sends it to the external API server using HTTP or HTTPS protocols, for example. The external API server or host may then receive the request, processes it, and generate a response containing the requested data or functionality. This response may be in various formats such as JSON (JavaScript Object Notation), XML (eXtensible Markup Language), or Protobuf (Protocol Buffers). The external API integrator 130 may then parse the API response, extracts the relevant data or functionality, and integrates it into the user interface or underlying system. This may involve converting the data into a standardized format compatible with the mapping platform's data model and user interface components.

The presentation component 120 is generally responsible for causing presentation of information related to the mapping platform. For example, in some embodiments, the presentation component 120 causes presentation of a map and an indicator superimposed over the map representing an optimized route, and a natural language output generated by the output generator 114 of FIG. 1. In some embodiments, the presentation component 120 comprises one or more applications or services on a user device, across multiple user devices, or in the cloud. For example, in one embodiment, presentation component 120 manages the presentation of content to a user across multiple user devices associated with that user. Based on content logic, device features, associated logical hubs, inferred logical location of the user, and/or other user data, presentation component 120 may determine on which user device(s) content is presented, as well as the context of the presentation, such as how (or in what format and how much content, which can be dependent on the user device or context) it is presented and/or when it is presented. In particular, in some embodiments, presentation component 120 applies content logic to device features, associated logical hubs, inferred logical locations, or sensed user data to determine aspects of content presentation.

In some embodiments, presentation component 120 generates user interface features (or causes generation of such features) associated with pages. Such features can include user interface elements (such as graphics buttons, maps sliders, menus, audio prompts, alerts, alarms, vibrations, pop-up windows, notification-bar or status-bar items, in-app notifications, or other similar features for interfacing with a user), queries, and prompts. In some embodiments, a personal assistant service or application operating in conjunction with presentation component 120 determines when and how to present the content.

The presentation component 120 includes a map renderer 122. The map renderer 122 is generally responsible for rendering (e.g., at a graphical user interface) a map and associated data. For example, the map renderer 122 may first divide a geographic area (as identified by the geocoder 124) into small rectangular tiles, each representing a portion of the map at a specific zoom level. These tiles may then be pre-rendered at different zoom levels and stored in a tile cache for fast retrieval during map display. Tile generation may use rendering engines like Mapnik or TileMill to rasterize vector map data into image tiles.

In some embodiments, the map renderer 122 then provides map styling, such as customizing the appearance of the map elements, such as roads, labels, and landmarks, to enhance readability and visual appeal. Map styling may be defined using map styling languages like Mapbox GL Styles or Google Maps Styling Wizard, which allow developers to specify colors, line styles, label fonts, and other visual properties for map features.

In some embodiments, the map renderer 122 then performs map projection by projecting the geographic data onto a two-dimensional surface for display on a flat screen. In some embodiments, this involves transforming the coordinates of map features from geographic coordinates (latitude and longitude) to Cartesian coordinates (x and y) using map projection techniques like Mercator projection, Albers projection, or Lambert conformal conic projection. The map renderer 122 may then processes the map data and styling information to generate the final map image for display. This pipeline may involves several stages, including data retrieval, feature selection, styling application, geometry transformation, and rasterization. Each stage applies transformations and rendering techniques to create the map image efficiently.

In some embodiments, the map renderer 120 provides interactive features, such as panning, zooming, and rotation, to allow users to explore the map dynamically. These interactive features may be implemented using client-side scripting languages like JavaScript, which handle user input events and update the map display accordingly in real-time.

In some embodiments, the map renderer 122 employs various optimization techniques to improve performance and reduce rendering time. This may include caching frequently accessed tiles, using vector tiles instead of raster tiles for better scalability, implementing level of detail (LOD) techniques to prioritize rendering of high-detail areas, and optimizing rendering algorithms for parallel processing.

In some embodiments, the map renderer 122 adapts to different devices and screen sizes to ensure optimal display across various platforms, including desktop computers, smartphones, and tablets. They may use responsive design principles and device detection techniques to adjust map styling, tile resolution, and interactive features based on the user's device and viewport size.

Example system 100 also includes storage 105. Storage 105 generally stores information including contextual data (extracted by the contextual data extractor 102), computer instructions (for example, software program instructions, routines, or services), data structures, and/or models used in embodiments of the technologies described herein. In some embodiments, storage 105 represents any suitable data repository or device, such as a database, a data warehouse, RAM, cache, disk, RAID, and/or a storage network (e.g., Storage Area Network (SAN)). In some embodiments, storage 105 includes data records (e.g., database rows that represent each cluster) or other data structures (e.g., key-value pairs) that contain any suitable information described herein. In some embodiments, each record is called or requested and returned, over the computer network(s) 110, depending on the component needing it, as described herein.

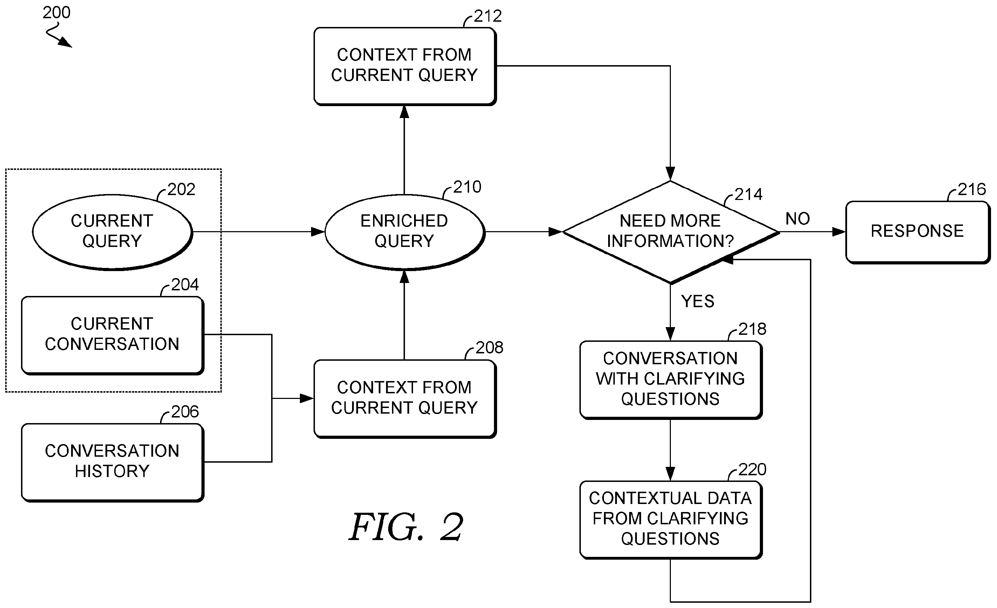

FIG. 2 is a block diagram of an example high level workflow of a contextual-aware map search system, according to some embodiments. At a first time, a first user issues a current query 202, which is a natural language command, question, or other utterance (as opposed to a structured query). For example, the current query 202 may be, "let's stick with city A." The current query 202 is a part of a current conversation 204. The current conversation 204 includes natural language questions, commands, turns, answers, and/or other natural language sequences generated by a map conversational assistant (e.g., the one or more language models 104) and/or the first user. For example, the current conversation 204 may include a query issued by the first user prior to the current query 202, such as "take me to location B, going through scenic road D" as well as a clarifying question by the map conversational assistant, such as "location B is found in two cities, city A and city C. Which city do you prefer?"

Both the current conversation 204 and the conversation history 206 may be stored (e.g., to storage 105) together as contextual data from past searches 208. Conversation history 206 refers to conversations between the same first user and the map conversational assistant at a prior time relative to the current conversation 204. For example, conversation history 206 may refer to natural language questions, answers, commands, and/or other dialogue between the map conversational assistant and the first user as part of a prior session or prior topic relative to the current conversation 204. In some embodiments, a "session" is initiated when a user logs into a site, or is recognized by the site as returning user who is associated with activity on the site. For example, a site may recognize a returning user via cookies. A session can be considered terminated after a user logs off of a site or becomes inactive (or idle) on the site for a predetermined period of time. For example, after 30 minutes of idle time without user input (i.e., not receiving any queries or clicks), the system may automatically end a session. However, in some embodiments, viewed more broadly, a "session" includes the idea that the user is trying to achieve a particular task (e.g., discuss a particular topic, such as directions to location A), with that task potentially spread over multiple devices and extended time period. The user could pick up a session on a different device, or after a lapse of time, and so forth. A user could have many parallel sessions going on simultaneously, for example. A session may include user phases, such as a discovery phase, an exploratory phase, a follow-up phase, and so forth.

In some embodiments, the contextual data from past searches 208 includes any of the contextual data (e.g., user preferences) extracted by the contextual data extractor 102 of FIG. 1. In some embodiments, a "search" as described herein refers to any particular natural language command, question, or utterance issued by a user to receive some information related to geographical information beck. Contextual data from past searches 208 refers to any natural language question, answer, command, or other utterance issued by the first user and/or the map conversational assistant prior to the current query 202.

The contextual data from past searches 208 is assembled together with the current query 202 to derive the enriched query 210. That is, the enriched query 210 includes both the current query 202 and contextual data from past searches 208 (i.e., the current conversation 204 and conversation history 206). In some embodiments, the language model(s) 108 then uses the enriched query 210 to determine contextual data from the current query 212. For example, using the illustration above, for the current query "let's stick with city A," the language model(s) 108 may determine spatial entities "location B" and "scenic road D" given data in the prior current conversation 204 - i.e., "take me to location B, going through scenic road D." From the current conversation 204, the language model(s) 108 may also determine temporal constraints, that scenic road D must be driven on first to arrive at location B (D comes before B).

In some embodiments, the prompt generator 112 then packages the context from the current query 212, as well as the enriched query 210 as a prompt, where the output generator 114 performs block 214 to determine whether more information 214 is needed. If no more information is needed (e.g., as determined by a prompt engineered or tuned language model(s) 108), then a response is generated (e.g., by the output generator 114). If more information is needed (e.g., as determined by a prompt engineered or tuned language model(s) 108), then block 218 is performed. In some embodiments, block 214 is determined based on how confident the language model(s) 108 is for a given response. For example, in some embodiments, each response may be associated with a confidence and so a response may be generated by the output generator 114 based on a confidence level exceeding some threshold score (e.g., 85% confidence) that the generated response is correct. If the confidence level does not exceed the threshold, block 218 is performed. If the confidence does exceed the threshold, then both block 216 (and its actual display or presentation) is performed.

Per block 218, the language model(s) 108 continues engaging in the conversation (i.e., the current conversation 204) with one or more clarifying questions. For example, a clarifying question might be, "there are multiple location A's in different cities. Which city would you like to travel to arrive at location A?" Per block 220, such clarifying questions are used as contextual data (e.g., as extracted by the contextual data extractor 102).

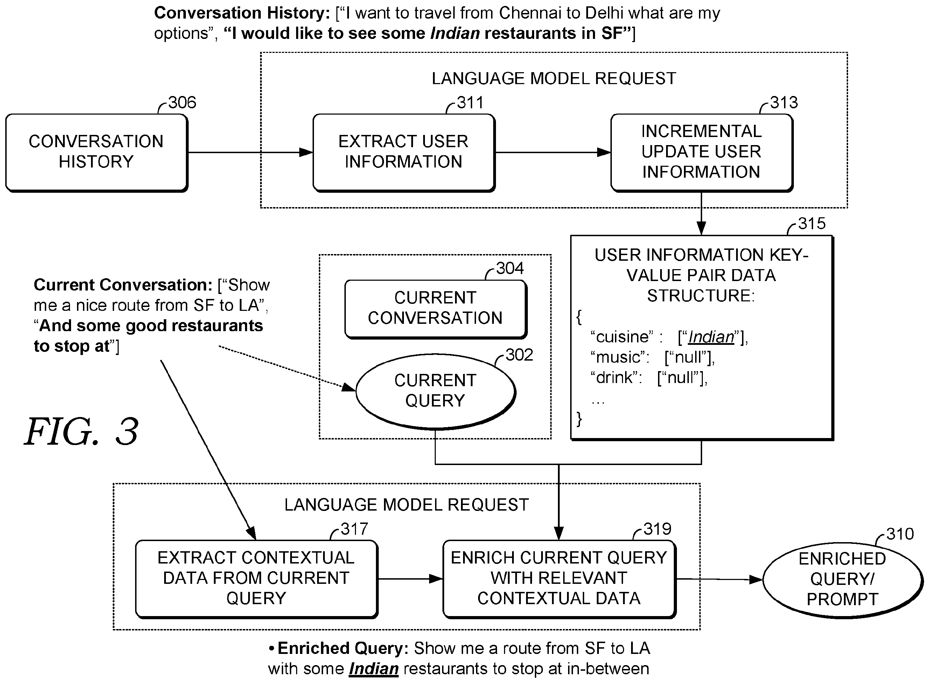

FIG. 3 is a block diagram illustrating how user information is extracted and how an enriched query/prompt 310 is generated from an example conversation, according to some embodiments. In conversational map search, the engine may need to enrich the current query 302 with contextual data from both the current and previous conversations in order to formulate an adequate response. Accordingly, both preservation of contextual data from the current conversation and personalization across multiple conversations is discussed.

At a first time, user A engages in conversation history 306 (e.g., the conversation history 206). As illustrated in FIG. 3, the conversation history 306 includes the phrases - "I want to travel from Chennai to Delhi what are my options?" and "I would like to see some *Indian* restaurants in SF." In response to receiving such conversation history 306, the language model(s) 108 performs block 311 by extracting user information from previous conversations (e.g., the conversation history 306). For example, as described above, the entity component 104 may extract (e.g., tag and/or determine), via NER, entities in the conversation history 306, such as "I" (user A), "restaurants" (cuisine) "Indian" (culture, ethnicity, India), and "SF" (city; San Francisco), where the language in the parenthesis represents a tag.

In some embodiments, block 311 is performed based on one or more rules or other criteria. For example, in order to determine how much user information to extract, the language model(s) 108 may only do a computer read of the last 10 conversations (or weight the last 10 conversations higher/more relevant relative to older conversations). For instance, particular embodiments may store each natural language question, command, answer, utterance, or any other part of a conversation in a LIFO queue data structure, where the most recent language is ordered/weighted first relative to older language. A "conversation" as described herein may be natural language discussion of a particular geographical topic, location, and/or route within a threshold quantity of time (e.g., commands, questions, or answers may only be considered as part of the same conversation if they occurred with a same day or within a threshold quantity of minutes).

After block 311, the language model(s) 108 may then perform block 313 by incrementing/updating the user information key-value pair data structure 315. The user information key-value pair data structure 315 is a data structure that contains any suitable user information (and/or other contextual data) within the conversation history 306. The user information key-value pair data structure may be any suitable data structure that has keys and values, such as a hash map, lookup table, associative array, dictionary, symbol table, or tree map.

As illustrated in 315, there are multiple "keys" such as "cuisine," "music," and "drink," and corresponding values, such as "Indian," (as well as empty/"null" values). For example, based on NER functionality tagging or extracting the word "Indian" from the conversation history 306, the language model(s) 108 populates the "cuisine" key with the "Indian" value. In some embodiments, each of the keys are predetermined or hand-coded by a developer at build-time. Alternatively, in some embodiments, each of the keys are determined at run-time or based on the exact entities found in the conversation history 306. For example, in some embodiments, the language model(s) 108 uses each tag that describes an entity as a key. For example, if the word "Indian" was tagged with (cuisine) during NER, then particular embodiments extract or copy "cuisine" from the tag and responsively populate the data structure 315 with a corresponding key "cuisine."

User preferences and non-sensitive information can be learnt from conversation histories (e.g., conversation history 306). Some embodiments perform a naive method to leverage such user information by feeding to the language model(s) 108 all historical conversations (e.g., 306), but this may be impractical due to high latency, input length limit, and high computation cost. However, by leveraging query (e.g., the current query 302) and response history (e.g., conversation history 306), various embodiments generate a user information key-value pair data structure 315, which is used to enhance the context similarly to retrieval augmented generation (RAG) approaches, illustrated by 311 and 313. As described above, in some embodiments, the keys in the data structure 315 (e.g., a dictionary) are predefined according to the service functionality, and in some embodiments a LLM incrementally fills in and updates each value after each recent conversation. For example, in Figure 3, LLM learns user's cuisine preference being Indian from previous conversation.

After the user information key-value pair data structure 315 is populated, various embodiments receive a current query 302 (e.g., the current query 202), which is part of a current conversation 304 (e.g., the current conversation 204). As illustrated in FIG. 3, the current query 302 is "And some good restaurants to stop at." Such language is a part of a prior turn in the current conversation 304 - i.e., "Show me a nice route from SF to LA." Per block 317, the language model(s) 108 may then extract contextual data from the current the current query 302 (i.e., "And some good restaurants to stop at"). For example, the entity component 104 may tag entities in this natural language sequence, such as "restaurants" (cuisine) and/or any other spatial or temporal constraints. Per block 319, the language model(s) 108 may then enrich the current query 302 with relevant contextual data (e.g., the contextual data extracted by the contextual data extractor 102), using the user information key-value pair data structure 315, the current conversation 304, the current query 302, and the contextual data from 317 as input to generate the enriched query 310 (e.g., the enriched query 210). As illustrated in FIG. 3, for example, the prompt generator 112 may then generate a prompt - "Show me a route from SF to LA with some *Indian* restaurants to stop at in-between." As illustrated in this prompt, the word "Indian" was extracted from the user information key-value pair data structure, and the rest of the language in the prompt was generated by combining language from both the current query 302 and other language from the current conversation 304.

In some embodiments, an LLM formulates the enriched query/prompt 310. Such LLM may do so through its generative language capabilities. For example, the LLM may engage in concepts, such as "text summarization" to summarize information from the key-value pair data structure 315, the current query 302, the current conversation 304, and 317. Text summarization is the process of distilling the main points or key information from a given dataset (e.g., 315, 302, 304, and 317) while retaining its essence. In the context of a Large Language Model (LLM), text summarization typically involves generating a condensed version of a longer dataset or passage while preserving its meaning and important details. For example, the LLM may first perform preprocessing by removing irrelevant information, such as stopwords, formatting, and potentially redundant sentences. The LLM may then analyze the text to understand its content, identifying key concepts, entities (e.g., via NER), and relationships within the dataset. This process involves natural language understanding (NLU) capabilities, including semantic analysis and contextual understanding. The LLM may then determine which information is crucial for conveying the main points of the text. This can involve selecting significant sentences, paragraphs, or sections that encapsulate the essence of the document. Such determination may be based on prompt engineering or tuning (e.g., prompt tuning), as described in more detail below. Based on the selected information, the LLM generates a concise summary that captures the main ideas and key details of the original dataset. This summary is crafted to be coherent and readable, using language generation techniques to produce fluent and grammatically correct sentences.

Accordingly, given the current conversation 304 and user information key-value pair data structure 315, another language model request may be invoked to enrich the query with additional contexts (i.e., the enriched query/prompt 310). Various embodiments thus pass both the current query 302, the whole current conversation 304, and the data structure 315 in a prompt, asking the language model(s) 108 (e.g., an LLM) to generate an enriched query with necessary contextual information represented by the enriched query/prompt 310. For example, given the conversation 304 and current query 302 in FIG. 3, the LLM would link restaurants suggestions with the route from SF to LA, as seen in the resulting enriched query 310. In addition, the LLM would also consider user cuisine preference and thus enrich the query with

"Indian Restaurant."

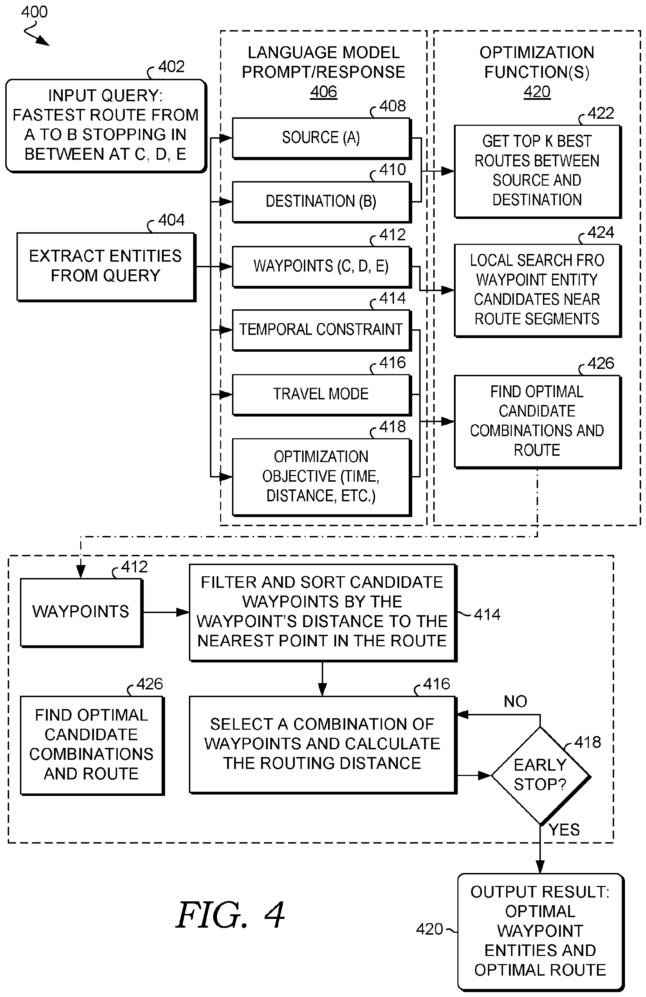

FIG. 4 is a block diagram illustrating a pipeline 400 integrating constraint understanding through a language model with subsequent algorithmic components implementing the constraints, according to some embodiments. Contextual data from current query (e.g., current query 302) is a strong signal and usually appears as constraints. In some embodiments, there are at least two kinds of constraints: spatial consistency/constraints and temporal consistency/constraints. Spatial consistency represents the geometric relations among relevant entities, for example, in the query "from Stanford to Sunnyvale library stop at a coffee shop," the language model(s) 108 needs to find a coffee shop along the route from Stanford to Sunnyvale library rather than any arbitrary one. Temporal consistency focuses on the time related requirements in the query, such as "driving route from Seattle downtown to Redmond downtown at 5pm" or "driving from Stanford to Sunnyvale Library with stops at a coffee shop first then a gas station." In both examples, figuring out the correct time constraint may be critical for a desired response. Current mapping technologies do not provide such spatial and temporal constraints readily, as described in more detail below. Since such constraints require mathematical reasoning (including distance calculation, numerical optimization, beam search, etc.), the language model(s) 108 alone may not be enough. In these instances, additional models or mapping functionality may be needed, such as the functionality described with respect to the mapping component 116 of FIG. 1. For example, the geographic information optimizer 126 may perform all the functionality of the optimization function(s) 420.

Per block 402, at a first time a user issues the input query 403 (e.g., current query 302) - "Fastest route from A to B stopping in between at C, D, E." Per block 404, the entity component 104 then extracts entities from the input query 402, such as locations A, B, C, D, and E. Such extracted entities are then used to compute the language model prompt and response 406. Specifically, for example, the prompt generator 112 generates a prompt requesting what the "source," "destination," "waypoints," "temporal constraints," "travel mode," and "optimization objective" is as found within the input query 402. For example, the prompt generator 112 may generate a prompt in the form of a question stating, "what is the source, destination, waypoints, temporal constraints, travel mode, and optimization objective found in the input query 402." As described in more detail below, the prompt generator 112 may formulate such prompt based on having been previously prompt engineered or tuned (e.g., via prompt tuning). After ingesting such prompt, the output generator 114 may then generate a natural language response to the prompt, as illustrated by 408, 410, 412, 414, 416, and 418. That is, the "source" (i.e., starting point) is determined to be location "A" as indicated in the query 402. The "destination" is determined to be "B" as indicated in the query 402.

The "waypoints" are locations C, D, and E as illustrated in the input query 402. A "waypoint" is a specific location or point of interest along a route. Waypoints are intermediate points between source and destination that can be added to a route to customize a journey. They allow users to specify stops, detours, or specific locations they want to visit along the way to a destination. The "temporal constrain" 414 may indicate the traversal order to the locations as being from A, to C, then to D, then to E, then to B. The "travel mode" 416 may be indicative of the way the user has specified (e.g., via the input query 402 and/or a user interface filter) travel, such as via bike, vehicle, walking, or the like. The "optimization objective" refers to the intent or goal the user is trying to accomplish, as indicated in the input query 402. For example, in the input query 402, the optimization objective is to compute the "fastest" route, give the constraints. In other examples, however, the optimization objective may be to alternatively or additionally find the "closest" location, which is based on distance optimization objectives.

Examples of different optimization objectives are as follows. Cost optimization - various embodiments consider the cost associated with using different transportation modes, such as fuel costs for driving, public transportation fares, toll fees, or ride-sharing prices. Thus some embodiments provide route recommendations that minimize overall travel costs, taking into account factors like fuel efficiency, toll avoidance, and cost-effective transit options. Some embodiments alternatively or additionally evaluate the environmental impact of different transportation choices, such as vehicle emissions, carbon footprint, and energy consumption. Various embodiments thus recommend routes that minimize greenhouse gas emissions or promote eco-friendly transportation options like walking, cycling, or using public transit. Other optimization objectives include maximizing safety. Some embodiments analyze historical traffic accident data, road conditions, and safety ratings to identify the safest routes for navigation. These embodiments thus avoid routes with high accident rates, hazardous road conditions, or areas prone to traffic congestion and accidents.

In some embodiments, such optimization objective includes prioritizing accessibility. These embodiments consider accessibility factors for users with disabilities, such as wheelchair-accessible routes, curb ramps, and accessible public transit options. These embodiments recommend routes that prioritize accessibility features and accommodations, making navigation easier for users with mobility impairments or special needs. Some optimization objectives include optimizing for scenic routes. These embodiments incorporate user preferences for scenic drives, landmarks, and points of interest into route recommendations. Some of these embodiments identify routes with picturesque views, scenic overlooks, and cultural attractions to enhance the user's travel experience. Some optimization objectives are based on maximizing health and wellness. These embodiments promote routes that encourage physical activity and outdoor recreation, such as walking paths, biking trails, and pedestrian-friendly neighborhoods. These embodiments may thus recommend routes that prioritize health and wellness objectives, such as minimizing sedentary behavior, promoting active transportation, and reducing air pollution exposure. Some or each of these optimization objectives can be determined, for example, based on what is found in the contextual data by the contextual data extractor 102.

After the language model(s) 108 has generated a response (e.g., via the output generator 114) that indicates the source 408, the destination 410, the waypoints 412, the temporal constraint 414, the travel mode 416, and the optimization objective 418, these outputs are then fed, as input, into one or more optimization functions 420. The optimization function(s) 422 include individual optimization functions 422, 424, and 426. The optimization 422 calculates the top K best (e.g., fastest) routes between the source and destination using source 408 and destination 410 as input. Any suitable algorithm can be used, such as Dijkstra's algorithm, A* (A star), contraction hierarchies, and/or bidirectional search.

Per block 424, after block 422 the optimization function 424 may locate search for waypoint candidates near (e.g., within a predetermined distance) route segments (and/or near the source/destination). A "route segment" is at least a portion of a combination of roads/streets that lead from source to destination. For example, to get from location A to B, roads 1, 2, and 3 may have to be taken. A route segment may be road 1 (and/or road 2, or 3). Regarding block 424, some embodiments use spatial indexing techniques combined with geometric algorithms to calculate waypoint candidates near route segments efficiently. For example, an R-tree algorithm may be used. R-trees are spatial indexing structures designed for efficient storage and retrieval of spatial objects, such as points, rectangles, or polygons, in multi-dimensional space. In the context of mapping services, R-trees may be used to index geographic features, such as road segments, points of interest, or landmarks.

Responsive to block 424, the optimization function 426 finds optimal candidate combinations and route based on taking, as input, the results from 424, 422, the temporal constraint 414, the travel mode 416, and the optimization objective 418. For example, even though optimization function 422 calculated route 1 as the fastest route between A and B, the optimization objective function 418 may be to drive the scenic route, which then bumps route 1 down in ranking and route 2 is consequently selected, which represents a combination of a fast route, but that is more scenic.

Per block 414, in response to 426 being computed, the waypoints 412 are provided as input into the optimization function 414, which filters and sorts candidate waypoints by the waypoint's distance to the nearest point in the route. For example, each candidate waypoint may be populated in a LIFO queue where the top of the queue represents the nearest waypoints and the bottom of the queue represents the furthest away waypoints to a given route segment and/or the user's current location (e.g., as determined via a GPS module).

Per block 416, the optimization function 416 responsively selects a combination of waypoints based on 414 (e.g., those waypoints at the top of the queue or representing a threshold quantity at the top within the queue). The optimization function 416 then calculates the routing distance (e.g., from each route segment to selected waypoints). Per block 418, it is determined whether an "early stop" is needed for the heuristics of 416. If an early stop is not needed, the optimization function 416 is repeated in a loop. If early stop is needed, then block 420 is performed to output the result, which is the optimal waypoint entities and optimal route. An "early stop" with respect to block 418 refers to the concept of not completing the entire heuristic algorithm (i.e., "stopping" the optimization function 416 early). For example, it may be desirable not to iterate all 10,000 combinations to go from A to B, stopping at C, D, and E. Accordingly, various embodiments can sort based on distance of C, D, and E to A, B, and/or a particular route segment. A predetermined distance, for example, may be computed where each combination is computed if and until the distance threshold is met, at which point the decision at block 418 is "yes."

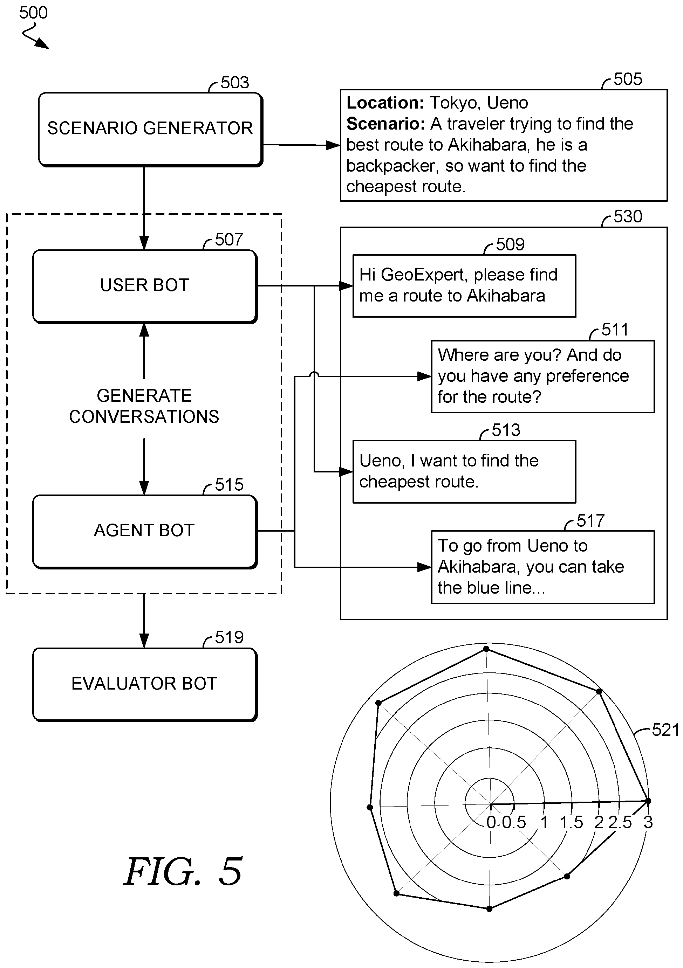

FIG. 5 is a block diagram of an automated pipeline 500 to evaluate conversations within a simulated user interaction environment, leveraging three language models, according to some embodiments. This environment comprises three distinct bots, each powered by different language models (e.g., LLMs) User Bot 507, Agent Bot 515, and Evaluator Bot 519. In some embodiments, the user Bot 507, the Agent Bot 515, and the Evaluator Bot 519 together represent the language model(s) 108 of FIG. 1. In some embodiments, the pipeline 500 represents how the language model(s) 108 are prompt engineered, tuned (e.g., fine-tuned or prompt-tuned), tested, and/or validated. The primary objective with respect to FIG. 5 is to create realistic conversation scenarios that can be assessed for quality and effectiveness. In some embodiments, each of the User Bot 507, Agent Bot 515, and the Evaluator Bot 519 represent three distinct language models respectively. For example, in some embodiments, User Bot 507 represents a Generative Pre-trained Transformer (GPT) 3.5 LLM, the Agent Bot 515 represents a separate GPT 3.5 LLM, and the Evaluator Bot 519 represents a GPT 4 LLM.

The pipeline 500 include the User Bot 507, which is programmed to initiate map search scenarios by simulating real-world user commands or questions. The Agent Bot 515 is generally responsible for then responding to the Agent Bot 515's simulated questions or commands. Multiple conversation instances are generated to ensure a comprehensive evaluation. The Evaluator Bot 519 assesses the generated conversation 530 between the User Bot 507 and the Agent Bot 515 against a set of criteria (e.g., benchmarks or Key Performance Indicators (KIPs) inspired by the Gricean maxims). The conversation 530 includes the individual commands and responses 509. 511, 513, and 517.

Specifically, the pipeline 500 begins when the scenario generator 503 generates a scenario 505. In some embodiments, the scenario 505 (or any scenario the scenario generator 503 generates) represents predefined text that a programmer creates. In these embodiments, after a programmer has created the scenario 505, the scenario generator 503 may then select (e.g., randomly) one or more scenarios to feed to the User Bot 507. In some embodiments, the scenario generator 503 alternatively represents another language model that automatically produces the scenario 505 via natural language processing, such as NER, NLU, text summarization, or the like. In these embodiments, a predetermined dataset (e.g., documents on the web) may be extracted, scraped, or otherwise obtained and the information contained therein may be extracted via NLP and text generation to build the scenario 505.

As illustrated in the pipeline 500, the scenario generator 503 feeds the scenario 505, as input, into the User Bot 507. Responsively, the User Bot 507 generates the simulated user command - "Hi GeoExpert, please find me a route to Akihabara." As described in more detail below, such User Bot 507 may be prompt-engineered or tuned to be able to generate the simulated command 509. Taking the simulated user command 509 as input, the Agent Bot 515 may then generate a clarifying question 511 - "Where are you? And do you have any preference for the route?" As described in more detail below, the Agent Bot 515 may be prompt-engineered or tuned to generate the clarifying question 511. Taking the clarifying question 511 as input (and/or the simulated user command 509), the User Bot 507 may then issue another simulated command 513 - "Ueno, I want to find the cheapest route" - which is responsive to the clarifying question 511. As described in more detail below, the User Bot 507 may be prompt-engineered or tuned to generated the second simulated user command 513. Taking the responsive simulated user command 513 (and/or simulated user command 509, clarifying question 511) as input, the Agent Bot 415 issues another response - "To go from Ueno to Akihabara, you can take the blue line..." which is responsive to the second simulated user command 513. As described in more detail below, the Agent Bot 515 may be prompt-engineered or tuned to generate the response 517.

After the conversation 530 has completed, the conversation 530 is stored to storage 105. The Evaluator Bot 519 then accesses, from the storage 105, the conversation 530 and automatically evaluates the conversation 530 based on Key Performance Indicators (KPI) of conciseness, completeness, closure, correctness, relevance, consistency, clearness, and conversation flow. As described in more detail below, the evaluator bot 519 may be prompt engineered or tuned to evaluate the conversation 530. "Conciseness" is the ability to express information in a brief yet comprehensive manner. "Completeness" ensures that all necessary and relevant information is provided to fully address the topic or question. "Closure" refers to the ability to effectively conclude a conversation or a topic with a clear end to the discussion. "Correctness" tests whether the language and information are appropriate and accurate for the context. "Relevance" is the degree to which the information provided is directly related to the topic or question at hand. "Consistency" refers to maintaining a logical and coherent flow in the conversation without contradiction. "Clearness" refers to presenting information in an understandable and straightforward manner. "Conversation Flow" is the idea that the conversation should be engaging and inspiring with a proactive attitude.

In some embodiments, the output of the Evaluator Bot 519 is generative text, such as natural language sentences describing each of these KPIs. In some embodiments, the output additionally or alternatively includes the graphical element 521 (e.g., a compass) that visually indicates how the models performed according to each KPI, where the closer to the center of the pie shape the lines are, the worse the models performed (i.e., the values are lower) and the closer to the edge of the pie shape the lines are, the better the models performed (i.e., the values are higher).

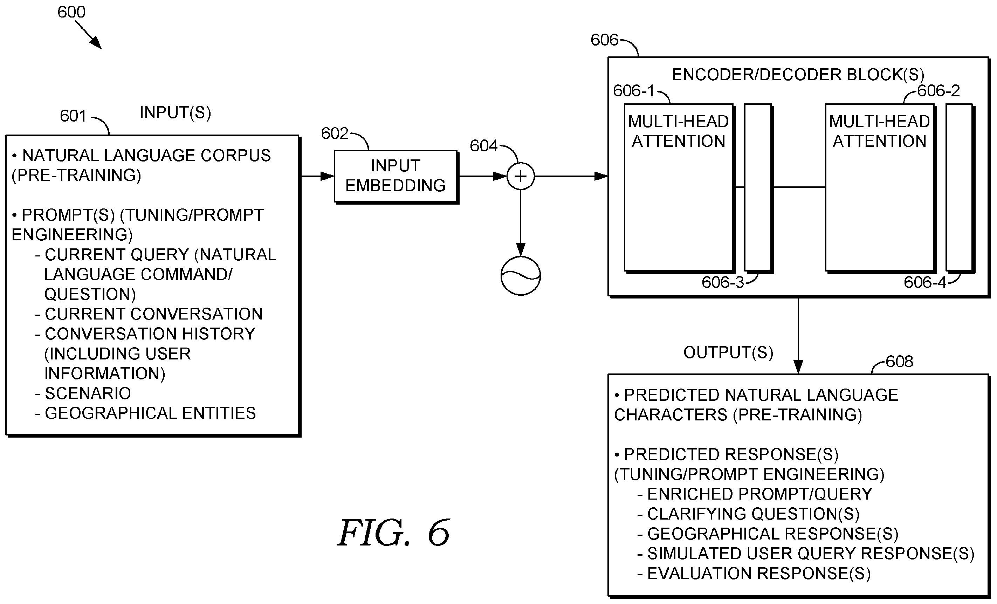

FIG. 6 is a block diagram of a Large Language Model 600 (e.g., a BERT model or GPT-4 model) that uses particular natural language input(s) to generate corresponding natural language output(s), according to some embodiments. In some embodiments, this model 600 represents or includes the functionality as described with respect to the language model(s) 108 of FIG. 1. In various embodiments, the LLM 600 includes one or more encoders and/or decoder blocks 606 (or any transformer or portion thereof).

At a first time, the inputs 601 are converted into tokens and then feature vectors are embedded into an input embedding 602 (e.g., to derive meaning of individual natural language words (for example, English semantics) during pre-training). In some embodiments, each word or character in the input(s) 601 is mapped into the input embedding 602 in parallel or at the same time, unlike existing long short-term memory (LSTM) models, for example. The input embedding 602 maps a word to a feature vector representing the word. But the same word (for example, "apple") in different sentences may have different meanings (for example, a device versus a piece of fruit). This is why a positional encoder 604 may be implemented. A positional encoder 604 is a vector that gives context to words (for example, "apple") based on a position of a word in a sentence. For example, with respect to a message "I just sent the document," because "I" is at the beginning of a sentence, embodiments may indicate a position in an embedding closer to "just," as opposed to "document." Some embodiments use a sign/cosine function to generate the positional encoder vector 604 as follows:

$$PE_{(pos,2i)} = sin\left(pos/10000^{2i/d_{model}}\right)$$

$$PE_{(pos,2i+1)} = cos\left(pos/10000^{2i/d_{model}}\right).$$

After passing the input(s) 601 through the input embedding 602 and applying the positional encoder 604, the output is a word embedding feature vector (e.g., a 1D numerical sequence), which encodes positional information or context based on the positional encoder 604. These word embedding feature vectors are then passed to the encoder and/or decoder block(s) 606, where it goes through a multi-head attention layer 606-1 and a feedforward layer 606-2. The multi-head attention layer 606-1 is responsible for focusing or processing certain parts of the feature vectors representing specific portions of the input(s) 601 by generating attention vectors. For example, in Question Answering systems, the multi-head attention layer 606-1 determines how relevant the ith word is for answering the question (e.g., "give me directions location A") or relevant to other words in the same or other sentences, the output of which is an attention vector. For every word, some embodiments generate an attention vector, which captures contextual relationships between other words in the same sentence or other sequence of characters. For a given word, some embodiments compute a weighted average or otherwise aggregate attention vectors of other words that contain the given word (for example, other words in the same line or sentence) to compute a final attention vector.

In some embodiments, a single headed attention has abstract vectors Q, K, and V that extract different components of a particular word. These are used to compute the attention vectors for every word, using the following formula:

$$Z = softmax \left( \frac{Q.K^T}{\sqrt{Dimension\ of\ vector\ Q, K\ or\ V}} \right).V$$

For multi-headed attention, there may be multiple weight matrices Wq , Wk and Wv, so there are multiple attention vectors Z for every word. However, a neural network may only expect one attention vector per word. Accordingly, another weighted matrix, Wz, may be used to make sure the output is still an attention vector per word. In some embodiments, after the layers 606-1 and 606-2, there is some form of normalization (for example, batch normalization and/or layer normalization) performed to smoothen out the loss surface making it easier to optimize while using larger learning rates.

Layers 606-3 and 606-4 represent residual connection and/or normalization layers where normalization re-centers and re-scales or normalizes the data across the feature dimensions. The feedforward layer 606-2 is a feed forward neural network that is applied to every one of the attention vectors outputted by the multi-head attention layer 606-1. The feedforward layer 606-2 transforms the attention vectors into a form that may be processed by the next encoder block or by making a prediction at 608. For example, given that a sentence fragment includes first natural language sequence "what is the fastest..." the encoder/decoder block(s) 606 predicts that the next natural language sequence will be "rout to location A" based on past natural language sentences that include language identical or similar to the first natural language sequence.

In some embodiments, the encoder/decoder block(s) 606 may be trained to learn language (pre-training) and make corresponding predictions. In some embodiments, the encoder/decoder block(s) 606 first learns what language and context for a word is in pre-training by training on two unsupervised tasks - Masked Language Modeling (MLM) and Next Sentence Prediction (NSP) - simultaneously. In terms of the inputs and outputs, at pre-training, the natural language corpus of the inputs 601 may be various historical documents, such as textbooks, journals, web data, and/or periodicals in order to output the predicted natural language characters in 608 (not make the predictions at tuning/prompt engineering at this point). The encoder/decoder block(s) 606 takes in a sentence, paragraph, or sequence (for example, included in the input(s) d01), with random words being replaced with masks. The goal is to output the value or meaning of the masked tokens. For example, if a line reads, "please [MASK] this document promptly," the prediction for the "mask" value is "send." This helps the encoder/decoder block(s) 606 understand the bidirectional context in a sentence, paragraph. In the case of NSP, the encoder/decoder block(s) 606 takes, as input, two or more elements, such as sentences, lines, or paragraphs and determines, for example, if a second sentence in a document follows (for example, is directly below) a first sentence in the document. This helps the encoder/decoder block(s) 606 understand the context across all the elements of a document, not just within a single element. Using both of these together, the encoder/decoder block(s) 606 derives a good understanding of natural language during pre-training.

In pre-training, the output is typically a binary value C (for NSP) and various word vectors (for MLM). With training, a loss (for example, cross entropy loss) is minimized. In some embodiments, all the feature vectors are of the same size and are generated simultaneously. As such, each word vector may be passed to a fully connected layered output with the same number of neurons equal to the same number of tokens in the vocabulary.

In some embodiments, once pre-training is completed, the encoder/decoder block(s) 606 performs prompt engineering and/or tuning (e.g., prompt-tuning, and/or fine tuning). For example, for fine tuning, some embodiments perform a QA task by adding a new question-answering (e.g., a question-tokenized representation pair) head or encoder/decoder block in 606, just the way a masked language model head is added (in pre-training) for performing a MLM task, except that the task is a part of fine-tuning to add new input data in the input(s) 601 (i.e., the "current query, "conversation history, "scenario,") and adjust the weights formulated during pre-training. In other words, fine-tuning adds additional input data (i.e., the specific prompts in the input(s) 201 that are not part of pre-training), output tokens, and performs additional rounds of training to further adjust weights to formulate the output(s) 608 that are not part of pre-training. For example, with respect to question-answer pairs, some embodiments mask the question to test the model's knowledge of what each sequence in the question belongs to what prompt/question or use a form of NSP to predict the next sentence or word.

Prompt engineering is the process of guiding and shaping ML model responses (e.g., the predicted response(s) in the output(s) 608) by relying on the user, or prompt engineer, to craft more carefully phrased and specific queries or prompts. With prompt engineering, the weights are frozen (i.e., its values remain the same from pre-training) such that they are not adjusted during prompt engineering. A "prompt" as described herein may include one or more of the inputs in 601, a current query, code snippets, mathematical equations, one or more examples (e.g., one-shot or two-shot examples), a hard prompt or template, and/or a numerical embedding (e.g., a "soft" prompt). In some embodiments, an "example" is indicative of few-shot prompting, which is a technique used to guide large language models (LLMs), like GPT-3, towards generating desired outputs by providing them with a few examples of input-output pairs.

The prompt engineering process often involves iteratively asking increasingly specific and detailed questions/commands/instructions or testing out different ways to phrase questions/commands/instructions. The goal is to use prompts to elicit better behaviors or outputs as indicated in the predicted response(s) of the output(s) 608 from the model. Prompt engineers may experiment with various types of questions/commands/instructions and formats to find the most desirable and/or relevant model responses. For example, a prompt engineer may initially provide a prompt (e.g., "what are the entities specified in the current query"). However, this may not be specific enough/or may elicit the wrong predicted response(s) in 608 (e.g., listings non-geographical entities, such as persons), so the prompt engineer may formulate another prompt template that states, "what are the source, destinations, and waypoints specific in the current query" and the response token may then correctly list the source, destination, and waypoints (i.e., the correct geographical entities). The prompt engineer may be satisfied with this prompt. Subsequent to this satisfactory answer, particular embodiments save the corresponding event data prompt as a template. In this way, the prompt template (e.g., a "hard" prompt) may be used at runtime or when the model is deployed.

Prompt tuning is the process of taking or learning the most effective prompts or cues (among a larger pool of prompts) and feeding them to the encoder/decoder block(s) 606 as task-specific context. For example, a common question or phrase - "what is the optimization objective?" - could be taught to the encoder/decoder block(s) 606 to help optimize the model and guide it toward the most desirable decision or corresponding outputs in the predicted response(s) of 608. Unlike prompt engineering, prompt tuning is not about a user formulating a better question/command or making a more specific request. Prompt tuning means identifying more frequent or important prompts (e.g., which have higher node activation weight values) and training the encoder/decoder block(s) 606 to respond to those common prompts more effectively with correct predicted response(s). The benefit of prompt tuning is that it may be used to modestly train models without adding any more input(s) 601 or prompts (unlike fine-tuning), resulting in considerable time and cost savings.

In some embodiments, prompt tuning may use soft prompts only, and may not include the use of hard prompts. Hard prompts are manually handcrafted text prompts (e.g., prompt templates) with discrete responses, which are typically used in prompt engineering. Prompt templating allows for prompts to be stored, re-used, shared, and programmed. Soft prompts are typically created during the process of prompt tuning. Unlike hard prompts, soft prompts are typically not viewed and edited in text. Soft prompts typically include an embedding, a string of numbers that derives knowledge from the encoder/decoder block(s) 606 (e.g., via pre-training). Soft prompts are thus learnable tensors concatenated with the input embeddings that may be optimized for a dataset. In some embodiments, prompt tuning creates a smaller light weight model (e.g., not the LLM 600) which sits in front of the frozen pre-trained model (i.e., the LLM 600 with weights set during pre-training). Therefore, prompt tuning involves using a small trainable model before using the LLM 600. The small model is used to encode the text prompt and generate task-specific virtual tokenized tokens. These virtual tokenized tokens are pre-appended to the prompt and passed to the LLM 600. When the tuning process is complete, these tokenized virtual tokens are stored in a lookup table (or other data structure) and used during inference, replacing the smaller model.

In some embodiments, the prompt(s) in input(s) 601 and/or the predicted response(s) in the output(s) 608 correspond to concepts described herein. For example, with respect to the prompt(s) in 601, in some embodiments, the current query represents the current query 202 of FIG. 2 the current query 302 of FIG. 3, the input query 402 of FIG. 4, the query 513 of FIG. 5. Likewise, in some embodiments, the current conversation in 601 represents the current conversation 204 of FIG. 4, the current conversation 304 of FIG. 3, and/or the conversation 530 of FIG. 5. In some embodiments, the conversation history of the input(s) 601 represents the conversation history 206 of FIG. 2, the conversation history 306 of FIG. 3, and/or the user information key-value pair data structure 315 of FIG. 3. In some embodiments, the scenario of the input(s) 601 represents the scenario 505 of FIG. 5. In some embodiments, the "geographical entities" of the input(s) 601 represents any of the entities described and illustrated in the language model prompt/response 406 (i.e., the source, destination, waypoints, temporal constraint, travel mode, and/or optimization objective).

Similarly, in some embodiments, the enriched prompt/query in the output(s) 608 represents the enriched query 210 of FIG. 2, the enriched query/prompt 310 of FIG. 3, which are generated based on the current query, the current conversation, conversation history and/or geographical entities of the input(s) 601. In some embodiments, the clarifying question(s) of the output(s) 608 represents the clarifying questions 511 and/or 517 of FIG. 5, and/or any clarifying question within the current conversation and/or conversation. Such output can be generated based on processing the current conversation, conversation history, current query, and/or geographical entities of the input(s) 601. In some embodiments, the geographical response(s) of the predicted response(s) in the output(s) 608 represent the output result 420 of FIG. 4. For example, the geographical response may be natural language sequence of characters describing an optimal route, the waypoints in the route, the destination, the source, the temporal constraints, and/or any other contextual data as it relates to geographical information. In some embodiments, the simulated user question response(s) of the output(s) 608 represent the simulated questions 509 and 513 based on ingesting the scenario, or other part of the current conversation (e.g., 530) as indicated in the input(s) 601. In some embodiments, the evaluation response(s) of the output(s) 608 represent the output produced by the Evaluator Bot 519, based on ingesting the current conversation (e.g., 530) as illustrated in the input(s) 601.

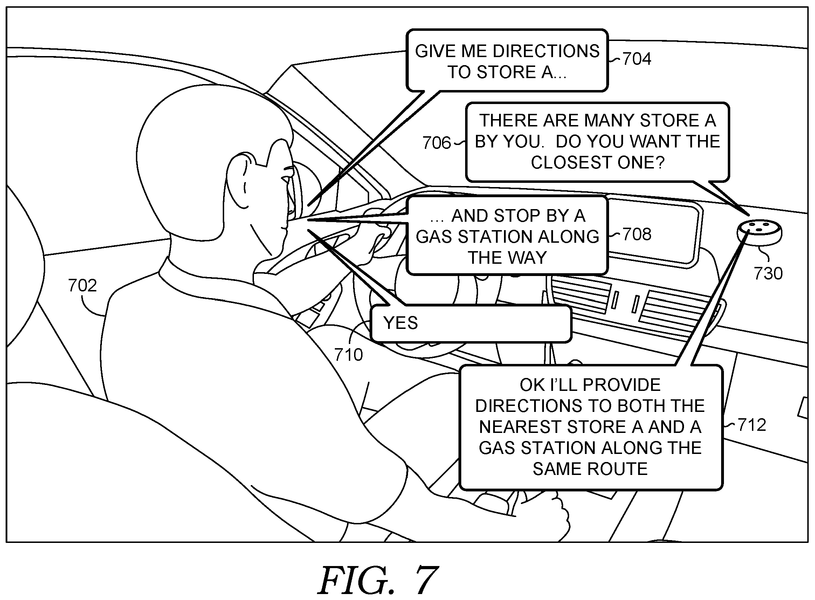

FIG. 7 is a schematic diagram illustrating a conversation between a vehicle operator 702 and a conversational assistant 730 (e.g., a smart speaker), according to some embodiments. In some embodiments, the commands and responses 704, 706, and 712, represent the current conversation 204 of FIG. 2, or 304 of FIG. 3. In some embodiments, the command 708 "And stop by a gas station along the way" represents the current query 202 of FIG. 2, current query 302 of FIG. 3, or the input query 402 of FIG. 4. In some embodiments, the conversational assistant 730 is configured to programmatically call or otherwise access any of the components of FIG. 1 to generate its output responses 706 and 712. FIG. 7 illustrates that various embodiments may be implemented via audio. At a first time, the vehicle operator 702 issues the command, "Give me directions to store A." In some embodiments, the conversational assistant 730 then receives this command and converts (e.g., via speech-to-text) the command 704 into a written text-based natural language command (or sends the audio to a backend service for such conversion).

Responsively, the conversational assistant 730 or natural language processing service (e.g., the language model(s) 108) generates a written text-based natural language clarifying question "there are many store A's by you. Do you want the closest one?" In some embodiments, such clarifying question represents 218 of FIG. 2 or a response via the response generator 114. Responsively, the conversational assistant 730 or speech service converts such written text-based clarifying question and converts (e.g., via text-to-speech) the clarifying question into an audio-based clarifying question 706. This same functionality is repeated for utterances 708, 710, and 712.

In some embodiments, and as described herein, in order to provide a response to the command 708, the language model(s) 108 use contextual data, such as 706 and 704 as input in order to answer the command 708. The vehicle operator 702 generates the utterance/answer 710 in response to the clarifying question 706. Accordingly, the conversational assistant 720 (e.g., via the language model(s) 108) generates the final output response 712 - "Ok I'll provide directions to both the nearest store A and a gas station along the same route,"

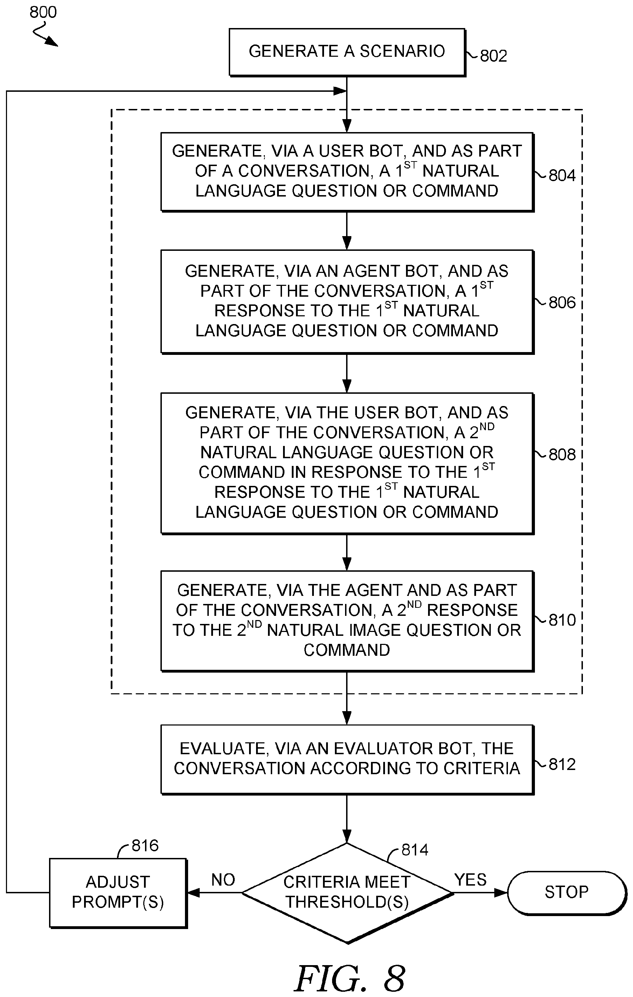

FIG. 8 is a flow diagram of an example process 800 for prompt engineering multiple language models, according to some embodiments. The process 800 (and/or any of the functionality described herein) may be performed by processing logic that comprises hardware (for example, circuitry, dedicated logic, programmable logic, microcode, and the like), software (for example, instructions run on a processor to perform hardware simulation), firmware, or a combination thereof. Although particular blocks described in this disclosure are referenced in a particular order at a particular quantity, it is understood that any block may occur substantially parallel with or before or after any other block. Further, more (or fewer) blocks may exist than illustrated. Added blocks may include blocks that embody any functionality described herein (for example, as described with respect to FIGS. 1-7). The computer-implemented method, the system (that includes at least one processor and at least one computer readable storage medium), and/or the computer readable medium as described herein may perform or be caused to perform the process 800 or any other functionality described herein.

Per block 802, some embodiments generate a scenario. For example, referring back to FIG. 5, the scenario generator 503 may generate the scenario 503. Per block 804, some embodiments generate, via a user bot and as part of a conversation, a first natural language question or command. For example, the User Bot 507 generates the command 508, which is part of the conversation 530. In this example, a first prompt may include the scenario 802, one or more examples, and a command to "generate a question based on the scenario 802." The first prompt may then be provided to the user bot as input so that the user bot generates the command 509.

Per block 806, some embodiments generate, via an agent bot and as part of the conversation, a first response to the first natural language question or command. For example, the Agent Bot 515 generates the clarifying question 511. In this example, a second prompt may include the scenario 802, one or more examples, the command to "generate a question based on the scenario 802," as well as the command 509. The second prompt may then be provided to the agent bot as input so that the agent bot generates the clarifying question 511.

Per block 808, some embodiments generate, via the user bot and as part of the conversation, a second natural language question or command in response to the first response to the first natural language question or command. For example, the User Bot 507 generates the user command 513. In this example, a third prompt may include the scenario 802, one or more examples, the command to "generate a question based on the scenario 802," the command 509, and/or the clarifying question 511. The third prompt may then be provided to the user bot as input so that the user bot generates the command 513, which is a response to the clarifying question 511.

Per block 810, some embodiments generate, via the agent bot and as part of the conversation, a second response in response to the second natural language question or command. For example, the Agent Bot 515 generates the response 517. In this example, a fourth prompt may include the scenario 802, one or more examples, the command to "generate a question based on the scenario 802," the command 509, the clarifying question 511, and/or the command 513. The fourth prompt may then be provided to the agent bot as input so that the agent bot generates the response 517, which is a response to the command 513.

Per block 812, some embodiments evaluate, via an evaluator bot, the conversation, according to criteria (e.g., predefined KPIs or benchmarks). For example, the Evaluator Bot 519 may perform one or more evaluation scores according to the compass 521. In this example, a fifth prompt may include the scenario 802, one or more examples, the command to "generate a question based on the scenario 802," the command 509, the clarifying question 511, the command 513, and/or the response 517. The fifth prompt may then be provided to the evaluator bot as input so that the evaluator bot generates a response, which is a response to the response 517. Per block 814, it is determined whether the criteria meet one or more thresholds.

Such "one or more thresholds" may correspond to any suitable KPI or benchmark attribute threshold, such as a conciseness threshold value, a completeness threshold value, a closure threshold value, a correctness threshold value, a relevance threshold value, a consistence threshold value, a clearness threshold value, and/or a conversational flow threshold value. If the criteria meet the one or more thresholds (e.g., there is a suitable clearness score that exceeds a threshold), then the process 800 stope. If, however, the criteria does not meet the threshold(s), then per 816, one or more prompts are adjusted, such as the first prompt, the second prompt, the third prompt, the fourth prompt, and/or the fifth prompt as described above. In some embodiments, based on the evaluation feedback, humans refine the prompts via prompt engineering by adjusting language, context, or structure to improve the model's performance. Additionally or alternatively, computing logic may assist in this process by suggesting alternative prompts or analyzing patterns in the responses to identify areas for improvement. Subsequent to the adjustment per block 816, the process loops back to blocks 804, 806, 808, 810, and/or 812 based on which prompts are adjusted according to the criteria meeting the threshold(s) and given a similar scenario relative to the scenario in block 802.

FIG. 9 is a flow diagram of an example process 900 for generating a language model response based on contextual data and a natural language question or command, according to some embodiments. Per block 903, some embodiments receive an indication of a natural language question or command corresponding to a request to obtain geographical information associated with a mapping platform. For example, such natural language question or command may refer to the "current query 202" of FIG. 2, the current query 302 of FIG. 3, or the input query 402 of FIG. 4. In some embodiments, such "indication" is the natural language question or command itself. In other embodiments, the indication is a numerical or other representation of the natural language question or command, such as the input embedding 602 of FIG. 6.

Additionally or alternatively, the "indication" can be any natural language utterance or characters that are not necessarily or directly a command or question. For example, at a first time a user may say, "give me directions to location A." A language model may generate a response to such command with "in what city would you like to travel to in order to reach location A?" The user may then responsively say, "City B." While "City B" itself is not directly a command or question, it is an "indication" of such question or command because of the user's prior command - i.e., "give me directions to location A." In another example, the "indication" may additionally or alternatively be an auditory utterance translated, via speech-to-text, natural language text into sound. In some embodiments, such natural language question or command of block 903 is a user-issued question or command (and not issued by a language model).

A "mapping platform" as described herein refers to a mapping service, mapping application, or any mapping technology described herein. In some embodiments, such "request" as indicated in block 903 can be any suitable request, such as a request to find a destination location (e.g., "take me to address 123 East A street" or "where is the nearest store A"), provide directions to the destination route (e.g., "give me directions to address 123 East A street"), or calculate a navigation route (e.g., "provide me with the quickest route to address 123 East A street"). Alternative request include any suitable request that a user can issue on a mapping platform, such as a request to view a map at a particular view (e.g., satellite view, street view, etc.), a request to obtain information about a road (e.g., whether the road is a dirt road) or location (e.g., "is there Northern access to location A") or the like. A "destination location" is any suitable represents any suitable location identifier, such as a street address, geo-coordinates (e.g., GPS latitude and longitude coordinates), cross-roads, a city, or the like. In some embodiments, the natural language question or command includes a command to find a route from a first location to a second location and stopping by at least a third location in between the first location and the second location (e.g., compute one or more way points), as described, for example, with respect to block 402 of FIG. 4.

Per block 905, some embodiments extract contextual data (e.g., as described with respect to the contextual data extractor 102) (e.g., based at least in part on the receiving of the indication of the natural language question or command). For example, some embodiments first detect entities in at least one of: a current conversation (e.g., 204 of FIG. 2 or 304 of FIG. 3) associated with the natural language question or command, or a historical conversation (e.g., 206 of FIG. 2 or 306 of FIG. 3). And based on the detecting, some embodiments populate a key-value pair data structure (e.g., as described with respect to 315 of FIG. 3) with one or more values. The key-value pair data structure is included in the contextual data in some embodiments. And the key-value pair is a part of the input into the one or more language models in some embodiments.

The "contextual data" may refer to any suitable contextual data as described herein. For example, in some embodiments the contextual data includes user information generated prior to the receiving of the indication (e.g., 311 and/or 315 of FIG. 3). In some embodiments, the user information includes at least one of: information from one or more previous turns that are part of a same first conversation as the natural language question or command (e.g., "show me a nice route from SF to LA" of the current conversation 304). In some embodiments, the contextual data includes one or more previous natural language questions or commands generated prior to the natural language question or command that are a part of a second conversation (e.g., the "I want to travel from Chennai to Delhi what are my options" and "I would like to see some Indian restaurants in SF" of the conversation history 306). In some embodiments, the contextual data includes any other user preferences of the user that issued the question or command (e.g., as indicated in the conversation history 306 or that are stored to storage 105, such as registration data that the user prefers to travel on particular types of streets).

In some embodiments, the contextual data includes one or more spatial or temporal constraints within the natural language question or command, where the one or more spatial constraints specify a geographic location a user asks to navigate to, and where the one or more temporal constraints include an order or time that the user asks to navigate to the geographical location at (e.g., the "source," "destination," and "waypoints" generated as part of the language model prompt via the language model prompt/response 406 of FIG. 4).

In some embodiments, the contextual data includes context from an output generated by the one or more language models. For example, the output includes a clarifying question that the one or more language models generate in response to a prior turn in the question or command or a prior question or prior command issued by a user before to the question or command. For example, such clarifying question may represent 218 of FIG.2, or any questions generated by the Agent Bot 515 of FIG. 5. In another example, the output may be a comment or answer to the user's question issued prior to the question or command, where the prior question may be a part of the same current conversation as the natural language question or command or a conversation completed prior to the current conversation.

Per block 907, some embodiment provide the contextual data and the natural language question or command as input into one or more language models (e.g., an LLM), where the language model(s) generate a response. A "response" as described herein refers to any suitable natural language output, such as described with respect to the output generator 114 of FIG. 1. For example, in some embodiments, the response includes an "enriched prompt" (e.g., representing the enriched query/prompt 310, the enriched query 210, and/or the prompt described with respect to the language model prompt/response 406. In other embodiments, the "response" is alternatively or additionally indicative of a clarifying question generated by a model. In other embodiments, the "response" is alternatively or additionally an answer to the user's question (e.g., block 420) or any other output.

In some embodiments, the response to the natural language question or command includes a clarifying question. And subsequent to the generation of the clarifying question, some embodiments a second indication of a second natural language question or command. Some embodiments then provide the second contextual data as input into the or more language models, wherein the second contextual data includes the clarifying question, the indication of the natural language question or command, and the contextual data, and wherein the one or more language models generate a second response. Such functionality represents a continuation of a same conversation associated with the natural language question or command. For example, such second natural language question or command may represent a user-issued command similar to command 513. And the second response may be, for example, a response similar to block 517 of FIG. 5, where, for example, block 509 represents the original natural language question or command (except that it was issued by a user instead of the User Bot 507).

## EXAMPLE COMPUTING ARCHITECTURE AND DEVICE

Turning now to FIG. 10, a block diagram is provided showing an example operating environment 10 in which some embodiments of the present disclosure may be employed. It should be understood that this and other arrangements described herein are set forth only as examples. Other arrangements and elements (for example, machines, interfaces, functions, orders, and groupings of functions) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by an entity may be carried out by hardware, firmware, and/or software. For instance, some functions may be carried out by a processor executing instructions stored in memory.

Among other components not shown, example operating environment 10 includes a number of user devices, such as user devices 02a and 02b through 02n; a number of data sources (for example, databases or other data stores, such as 105), such as data sources 04a and 04b through 04n; server 06; sensors 03a and 07; and network(s) 110. It should be understood that environment 10 shown in FIG. 10 is an example of one suitable operating environment. Each of the components shown in FIG. 10 may be implemented via any type of computing device, such as computing device 11 as described in connection to FIG. 11, for example. These components may communicate with each other via network(s) 110, which may include, without limitation, a local area network (LAN) and/or a wide area networks (WAN). In some implementations, network(s) 110 comprises the Internet and/or a cellular network, amongst any of a variety of possible public and/or private networks.

It should be understood that any number of user devices, servers, and data sources may be employed within operating environment 10 within the scope of the present disclosure. Each may comprise a single device or multiple devices cooperating in a distributed environment. For instance, server 06 may be provided via multiple devices arranged in a distributed environment that collectively provide the functionality described herein. Additionally, other components not shown may also be included within the distributed environment.

User devices 02a and 02b through 02n can be client devices on the client-side of operating environment 10, while server 06 can be on the server-side of operating environment 10. Server 06 can comprise server-side software designed to work in conjunction with client-side software on user devices 02a and 02b through 02n so as to implement any combination of the features and functionalities discussed in the present disclosure. This division of operating environment 10 is provided to illustrate one example of a suitable environment, and there is no requirement for each implementation that any combination of server 06 and user devices 02a and 02b through 02n remain as separate entities. In some embodiments, the one or more servers 06 represent one or more nodes in a cloud computing environment. Consistent with various embodiments, a cloud computing environment includes a network-based, distributed data processing system that provides one or more cloud computing services. Further, a cloud computing environment can include many computers, hundreds or thousands of them or more, disposed within one or more data centers and configured to share resources over the one or more network(s) 110.

In some embodiments, a user device 02a or server 06 alternatively or additionally comprises one or more web servers and/or application servers to facilitate delivering web or online content to browsers installed on a user device 02b. Often the content may include static content and dynamic content. When a client application, such as a web browser, requests a website or web application via a URL or search term, the browser typically contacts a web server to request static content or the basic components of a website or web application (for example, HTML pages, image files, video files, and the like). Application servers typically deliver any dynamic portions of web applications or business logic portions of web applications. Business logic can be described as functionality that manages communication between a user device and a data store (for example, a database). Such functionality can include business rules or workflows (for example, code that indicates conditional if/then statements, while statements, and the like to denote an order of processes).

User devices 02a and 02b through 02n may comprise any type of computing device capable of use by a user. For example, in one embodiment, user devices 02a through 02n may be the type of computing device described in relation to FIG. 11 herein. By way of example and not limitation, a user device may be embodied as a personal computer (PC), a laptop computer, a mobile phone or mobile device, a smartphone, a tablet computer, a smart watch, a wearable computer, a personal digital assistant (PDA), a music player or an MP3 player, a global positioning system (GPS) or device, a video player, a handheld communications device, a gaming device or system, an entertainment system, a vehicle computer system, an embedded system controller, a camera, a remote control, a bar code scanner, a computerized measuring device, an appliance, a consumer electronic device, a workstation, or any combination of these delineated devices, or any other suitable computer device.

Data sources 04a and 04b through 04n may comprise data sources and/or data systems, which are configured to make data available to any of the various constituents of operating environment 10 or system 100 described in connection to FIG. 1. Examples of data source(s) 04a through 04n may be one or more of a database, a file, data structure, corpus, or other data store. Data sources 04a and 04b through 04n may be discrete from user devices 02a and 02b through 02n and server 06 or may be incorporated and/or integrated into at least one of those components. In one embodiment, data sources 04a through 04n comprise sensors (such as sensors 03a and 07), which may be integrated into or associated with the user device(s) 02a, 02b, or 02n or server 06.

In some embodiments, operating environment 10 is utilized to implement one or more of the components of the system 100, described in FIG. 1, including components for assigning one or more datasets to one or more clusters, as described herein. Operating environment 10 also can be utilized for implementing aspects of processes 700, 800, 900 and/or any other functionality as described in connection with FIGS. 1-9.

Having described various implementations, an exemplary computing environment suitable for implementing embodiments of the disclosure is now described. With reference to FIG. 10, an exemplary computing device is provided and referred to generally as computing device 11. The computing device 11 is but one example of a suitable computing environment and is not intended to suggest any limitation as to the scope of use or functionality of embodiments of the disclosure. Neither should the computing device 11 be interpreted as having any dependency or requirement relating to any one or combination of components illustrated.

Turning to FIG. 11, computing device 11 includes a bus 19 that directly or indirectly couples the following devices: memory 12, one or more processors 14, one or more presentation components 16, one or more input/output (I/O) ports 18, one or more I/O components 20, an illustrative power supply 22, and a hardware accelerator 26. Bus 19 represents what may be one or more busses (such as an address bus, data bus, or combination thereof). Although the various blocks of FIG. 11 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 11 is merely illustrative of an exemplary computing device that can be used in connection with one or more embodiments of the present disclosure. Distinction is not made between such categories as "workstation," "server," "laptop," "handheld device," or other computing device, as all are contemplated within the scope of FIG. 11 and with reference to "computing device."

Computing device 11 typically includes a variety of computer-readable media. Computer-readable media can be any available media that can be accessed by computing device 11 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 11. Computer storage media does not comprise signals per se. Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 12 includes computer storage media in the form of volatile and/or nonvolatile memory. The memory may be removable, non-removable, or a combination thereof. Exemplary hardware devices include solid-state memory, hard drives, optical-disc drives, or other hardware. Computing device 11 includes one or more processors 14 that read data from various entities such as memory 12 or I/O components 20. Presentation component(s) 16 presents data indications to a user or other device. Exemplary presentation components include a display device, speaker, printing component, vibrating component, and the like.

The I/O ports 18 allow computing device 11 to be logically coupled to other devices, including I/O components 20, some of which may be built in. Illustrative components include a microphone, joystick, game pad, satellite dish, scanner, printer, wireless device, and the like. The I/O components 20 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 11. The computing device 11 may be equipped with depth cameras, such as stereoscopic camera systems, infrared camera systems, RGB camera systems, and combinations of these, for gesture detection and recognition. Additionally, the computing device 11 may be equipped with accelerometers or gyroscopes that enable detection of motion. The output of the accelerometers or gyroscopes may be provided to the display of the computing device 11 to render immersive augmented reality or virtual reality.

Some embodiments of computing device 11 may include one or more radio(s) 24 (or similar wireless communication components). The radio 24 transmits and receives radio or wireless communications. The computing device 11 may be a wireless terminal adapted to receive communications and media over various wireless networks. Computing device 11 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi® connection to a device (for example, mobile hotspot) that provides access to a wireless communications network, such as a WLAN connection using the 802.11 protocol, a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

Hardware accelerator 26 represents any suitable hardware component (e.g., GPU) that offloads one or more tasks (e.g., from a CPU) to accelerate or speed up the task. In some embodiments, the hardware accelerator 26 represents a Graphics Processing Unit (GPU), field programmable gate arrays (FPGA), application-specific integrated circuits (ASIC), a Tensor Processing Unit (TPU), a sound card, or any suitable hardware component..

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (for example, machines, interfaces, functions, orders, and groupings of functions, and the like.) can be used in addition to or instead of those shown.

Embodiments of the present disclosure have been described with the intent to be illustrative rather than restrictive. Embodiments described in the paragraphs above may be combined with one or more of the specifically described alternatives. In particular, an embodiment that is claimed may contain a reference, in the alternative, to more than one other embodiment. The embodiment that is claimed may specify a further limitation of the subject matter claimed. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims.

As used herein, the term "set" may be employed to refer to an ordered (i.e., sequential) or an unordered (i.e., non-sequential) collection of objects (or elements), such as but not limited to data elements (for example, events, clusters of events, and the like). A set may include N elements, where N is any non-negative integer. That is, a set may include 1, 2, 3,...N objects and/or elements, where N is an positive integer with no upper bound. Therefore, as used herein, a set may include only a single element. In other embodiments, a set may include a number of elements that is significantly greater than one, two, or three elements. As used herein, the term "subset," is a set that is included in another set. A subset may be, but is not required to be, a proper or strict subset of the other set that the subset is included in. That is, if set B is a subset of set A, then in some embodiments, set B is a proper or strict subset of set A. In other embodiments, set B is a subset of set A, but not a proper or a strict subset of set A.

## OTHER EMBODIMENTS

In some embodiments, a system, such as the computerized system described in any of the embodiments above, comprise at least one computer processor, one or more computer storage media storing computer-useable instructions that, when used by the at least one computer processor, cause the at least one computer processor to perform operations. The operations comprise: receiving a natural language question or command corresponding to a request to obtain geographical information associated with a mapping platform; in response to the receiving of the natural language question or command, extracting contextual data, the contextual data including at least one of: user information generated prior to the receiving of the natural language question or command, one or more spatial or temporal constraints within the natural language question or command, or context from an output generated by one or more language models; providing the contextual data and the natural language question or command as input into the one or more language models, wherein the one or more language models generate a response; and causing presentation, at a map interface associated with the mapping platform, of an indication associated with the response.

Advantageously, these and other embodiments of the system, as described herein, have the technical effects of improved Natural Language Understanding (NLU), information retrieval accuracy in handling ambiguity (e.g., in queries), reduced input/output (I/O) with respect to less complexity in query formulation, more flexibility, and information retrieval accuracy due to no (or less) dependency on structured data, as described above.

In any combination of the above embodiments of the system, the contextual data includes the user information generated prior to the receiving of the question or command, and wherein the user information includes at least one of: information from one or more previous turns that are part of a same first conversation as the natural language question or command, one or more previous natural language questions or commands generated prior to the natural language question or command that are a part of a second conversation, or user preferences of a user that issued the question or command.

In any combination of the above embodiments of the system, the contextual data includes the one or more spatial or temporal constraints within the natural language question or command, and wherein the one or more spatial constraints specify a geographic location a user asks to navigate to, and wherein the one or more temporal constraints include an order or time that the user asks to navigate to the geographical location at.

In any combination of the above embodiments of the system, the contextual data includes the context from an output generated by the one or more language models, and wherein the output includes a clarifying question that the one or more language models generate in response to a prior turn in the question or command or a prior question or prior command issued by a user before the natural language question or command.

In any combination of the above embodiments of the system, the response to the natural language question or command includes a clarifying question, and wherein the operations further comprising: subsequent to the generation of the clarifying question, receiving a second natural language question or command; providing second contextual data as input into the one or more language models, wherein the second contextual data includes the clarifying question, he natural language question or command, and the contextual data, and wherein the one or more language models generate a second response; and causing presentation, at the map interface associated with the mapping platform, of an indication associated with the second response.

In any combination of the above embodiments of the system, the operations further comprising: detecting entities in at least one of: a current conversation associated with the natural language question or command, or a historical conversation; and based on the detecting, populating a key-value pair data structure with one or more values, and wherein the key-value pair data structure is included in the contextual data, and wherein the key-value pair data structure is a part of the input into the one or more language models.

In any combination of the above embodiments of the system, the natural language question or command includes a command to find a route from a first location to a second location and stopping by at least a third location in between the first location and the second location, and wherein the response by the one or more language models includes at least one of: a source, a destination, one or more waypoints, a temporal constraint, a travel mode, and one or more optimization objectives, and wherein the operations further comprising: providing the response as an input into an optimization function, and wherein the optimization function computes the route, and wherein the indication associated with the response to the natural language question or command includes an indicator superimposed over the map interface and that represents the route.

In any combination of the above embodiments of the system, the operations further comprising: prompting or tuning the one or more language models by: generating, via a first model, a first natural language sequence representing a user question or command; generating, via a second model, a second natural language sequence representing a response to the first natural language sequence; and evaluating, via a third model, a quality of at least one of the first natural language sequence or the second natural language sequence based on one or more criterion, the one or more criterion including at least one of consistence, clearness, conversation flow, conciseness, completeness, closure, correctness, or relevance.

In any combination of the above embodiments of the system, the response is indicative of an enriched prompt that includes at least a portion of: the natural language question or command and the contextual data, and wherein the operations further comprising: providing the enriched prompt as second input into the one or more language models, and wherein the one or more language models generate a second response to the enriched prompt; and providing the second response as an input into an optimization function, and wherein the optimization function generates a third response associated with the geographical information and based at least in part on the enriched prompt.

In some embodiments, a computer-implemented method, such as the processes and/or methods described in any of the embodiments above, comprises: extracting contextual data based at least in part on receiving a natural language sequence associated with a request to obtain geographical information; based at least in part on the contextual data and the natural language sequence, generating, via one or more language models, an enriched prompt; and based at least in part on generating the enriched prompt, generating, via the one or more language models, a response to the enriched prompt; and causing presentation, at a map interface, of an indication associated with the response to the enriched prompt.

Advantageously, these and other embodiments of the computer-implemented method, as described herein, have the technical effects of improved Natural Language Understanding (NLU), information retrieval accuracy in handling ambiguity (e.g., in queries), reduced input/output (I/O) with respect to less complexity in query formulation, more flexibility, and information retrieval accuracy due to no (or less) dependency on structured data, as described above.

In any combination of the above embodiments of the computer-implemented method, the contextual data includes the user information generated prior to the receiving of the natural language sequence, and wherein the user information includes at least one of: information from one or more previous turns that are part of a same first conversation as the natural language sequence, one or more previous natural language sequences generated prior to the natural language sequence that are a part of a second conversation, or user preferences of a user that issued the natural language sequence.

In any combination of the above embodiments of the computer-implemented method, the contextual data includes the one or more spatial or temporal constraints within the natural language sequence, and wherein the one or more spatial constraints specify a geographic location a user asks to navigate to, and wherein the one or more temporal constraints include an order or time that the user asks to navigate to the geographical location at.

In any combination of the above embodiments of the computer-implemented method, the contextual data includes the context from an output generated by the one or more language models, and wherein the output includes a clarifying question that the one or more language models generate in response to a prior turn in the natural language sequence or a prior question or prior command issued by a user before to the natural language sequence.

In any combination of the above embodiments of the computer-implemented method, further comprising: detecting entities in at least one of: a current conversation associated with the natural language sequence, or a historical conversation; and based on the detecting, populating a key-value pair data structure with one or more values, and wherein the key-value pair data structure is included in the contextual data.

In any combination of the above embodiments of the computer-implemented method, the natural language sequence includes a command to find a route from a first location to a second location and stopping by at least a third location in between the first location and the second location, and wherein the response by the one or more language models includes at least one of: a source, a destination, one or more waypoints, a temporal constraint, a travel mode, and one or more optimization objectives, and wherein the method further comprising: providing the response as an input into an optimization function, and wherein the optimization function computes the route, and wherein the indication associated with the response to the enriched prompt includes an indicator superimposed over the map interface and that represents the route.

In any combination of the above embodiments of the computer-implemented method, further comprising: prompting or tuning the one or more language models by: generating, via a first model, a first natural language sequence representing a user question or command; generating, via a second model, a second natural language sequence representing a response to the first natural language sequence; and evaluating, via a third model, a quality of at least one of the first natural language sequence or the second natural language sequence based on one or more criterion, the one or more criterion including at least one of consistence, clearness, conversation flow, conciseness, completeness, closure, correctness, or relevance.

In any combination of the above embodiments of the computer-implemented method, further comprising: providing the second response as an input into an optimization function, and wherein the optimization function generates another response associated with the geographical information and based at least in part on the enriched prompt.

In some embodiments, one or more computer storage media, such as any computer storage media described in any of the embodiments above, has computer-executable instructions embodied thereon that, when executed, by one or more processors, cause the one or more processors to perform operations comprising: receiving a natural language question or command associated with a mapping platform; in response to the receiving of the natural language question or command associated with the mapping platform, extracting contextual data, the contextual data including at least one of: user information generated prior to the receiving of the natural language question or command, one or more spatial or temporal constraints within the natural language question or command, or context from an output generated by one or more language models; based at least in part on the extracting of the contextual data, generating a response; and causing presentation, at a user device, of an indication associated with the response.

Advantageously, these and other embodiments of the one or more computer storage media, as described herein, have the technical effects of improved Natural Language Understanding (NLU), information retrieval accuracy in handling ambiguity (e.g., in queries), reduced input/output (I/O) with respect to less complexity in query formulation, more flexibility, and information retrieval accuracy due to no (or less) dependency on structured data, as described above.

In any combination of the above embodiments of the one or more storage media, the response is indicative of an enriched prompt that includes at least a portion of: the natural language question or command and the contextual data, and wherein the operations further comprising: providing the enriched prompt as second input into one or more language models, and wherein the one or more language models generate a second response to the enriched prompt; and providing the second response as an input into an optimization function, and wherein the optimization function generates a third response associated with the geographical information and based at least in part on the enriched prompt.

In any combination of the above embodiments of the one or more storage media, the contextual data includes the context from an output generated by one or more language models, and wherein the output includes a clarifying question that the one or more language models generate in response to a prior turn in the question or command or a prior question or prior command issued by a user before to the question or command.

**Claims**

1. A system comprising:

   at least one computer processor (14); and
   one or more computer storage media (12) storing computer-useable instructions that, when used by the at least one computer processor, cause the at least one computer processor to perform operations comprising:

      receiving (903) a natural language question or command corresponding to a request to obtain geographical information associated with a mapping platform;
      in response (905) to the receiving of the natural language question or command, extracting contextual data, the contextual data including at least one of: user information generated prior to the receiving of the natural language question or command, one or more spatial or temporal constraints within the natural language question or command, or context from an output generated by one or more language models;
      providing (907) the contextual data and the natural language question or command as input into the one or more language models, wherein the one or more language models generate a response; and
      causing (911) presentation, at a map interface associated with the mapping platform, of an indication associated with the response.

2. The system of claim 1, wherein the contextual data is provided by one of the following:

(i) the contextual data includes the user information generated prior to the receiving of the question or command, wherein the user information includes at least one of: information from one or more previous turns that are part of a same first conversation as the natural language question or command, one or more previous natural language questions or commands generated prior to the natural language question or command that are a part of a second conversation, or user preferences of a user that issued the question or command; or
(ii) the contextual data includes the one or more spatial or temporal constraints within the natural language question or command, wherein the one or more spatial constraints specify a geographic location a user asks to navigate to, and wherein the one or more temporal constraints include an order or time that the user asks to navigate to the geographical location at.

3. The system of claim 1, wherein the contextual data includes the context from an output generated by the one or more language models, and wherein the output includes a clarifying question that the one or more language models generate in response to a prior turn in the question or command or a prior question or prior command issued by a user before the natural language question or command.

4. The system of claim 3, wherein the response to the natural language question or command includes a clarifying question, and wherein the operations further comprising:

subsequent to the generation of the clarifying question, receiving a second natural language question or command;
providing second contextual data as input into the one or more language models, wherein the second contextual data includes the clarifying question, he natural language question or command, and the contextual data, and wherein the one or more language models generate a second response; and
causing presentation, at the map interface associated with the mapping platform, of an indication associated with the second response.

5. The system of claim 1, wherein the operations further comprises one of the following:

(i) detecting entities in at least one of: a current conversation associated with the natural language question or command, or a historical conversation; and
based on the detecting, populating a key-value pair data structure with one or more values, and wherein the key-value pair data structure is included in the contextual data, and wherein the key-value pair data structure is a part of the input into the one or more language models; or
(ii) prompting or tuning the one or more language models by:

generating, via a first model, a first natural language sequence representing a user question or command;
generating, via a second model, a second natural language sequence representing a response to the first natural language sequence; and
evaluating, via a third model, a quality of at least one of the first natural language sequence or the second natural language sequence based on one or more criterion, the one or more criterion including at least one of consistence, clearness, conversation flow, conciseness, completeness, closure, correctness, or relevance.

6. The system of claim 1, wherein the natural language question or command includes a command to find a route from a first location to a second location and stopping by at least a third location in between the first location and the second location, and wherein the response by the one or more language models includes at least one of: a source, a destination, one or more waypoints, a temporal constraint, a travel mode, and one or more optimization objectives, and wherein the operations further comprising:
providing the response as an input into an optimization function, and wherein the optimization function computes the route, and wherein the indication associated with the response to the natural language question or command includes an indicator superimposed over the map interface and that represents the route.

7. The system of claim 1, wherein the response is indicative of an enriched prompt that includes at least a portion of: the natural language question or command and the contextual data, and wherein the operations further comprising:

providing the enriched prompt as second input into the one or more language models, and wherein the one or more language models generate a second response to the enriched prompt; and

providing the second response as an input into an optimization function, and wherein the optimization function generates a third response associated with the geographical information and based at least in part on the enriched prompt.

8. A computer-implemented method comprising:

extracting (905) contextual data based at least in part on receiving a natural language sequence associated with a request to obtain geographical information;
based (310) at least in part on the contextual data and the natural language sequence, generating, via one or more language models, an enriched prompt;
based (907) at least in part on generating the enriched prompt, generating, via the one or more language models, a response to the enriched prompt; and
causing (911) presentation, at a map interface, of an indication associated with the response to the enriched prompt.

9. The computer-implemented method of claim 8, wherein the contextual data is provided by one of the following:

(i) the contextual data includes user information generated prior to the receiving of the natural language sequence, wherein the user information includes at least one of: information from one or more previous turns that are part of a same first conversation as the natural language sequence, one or more previous natural language sequences generated prior to the natural language sequence that are a part of a second conversation, or user preferences of a user that issued the natural language sequence; or
(ii) the contextual data includes one or more spatial or temporal constraints within the natural language sequence, wherein the one or more spatial constraints specify a geographic location a user asks to navigate to, and wherein the one or more temporal constraints include an order or time that the user asks to navigate to the geographical location at; or
(iii) the contextual data includes context from an output generated by the one or more language models, wherein the output includes a clarifying question that the one or more language models generate in response to a prior turn in the natural language sequence or a prior question or prior command issued by a user before to the natural language sequence.

10. The computer-implemented method of claim 8, further comprising:

detecting entities in at least one of: a current conversation associated with the natural language sequence, or a historical conversation; and
based on the detecting, populating a key-value pair data structure with one or more values, and wherein the key-value pair data structure is included in the contextual data.

11. The computer-implemented method of claim 8, wherein the natural language sequence includes a command to find a route from a first location to a second location and stopping by at least a third location in between the first location and the second location, and wherein the response by the one or more language models includes at least one of: a source, a destination, one or more waypoints, a temporal constraint, a travel mode, and one or more optimization objectives, and wherein the computer-implemented method further comprising:
providing the response as an input into an optimization function, and wherein the optimization function computes the route, and wherein the indication associated with the response to the enriched prompt includes an indicator superimposed over the map interface and that represents the route.

12. The computer-implemented method of claim 8, further comprising one or more of the following:

(i) prompting or tuning the one or more language models by:

generating, via a first model, a first natural language sequence representing a user question or command;
generating, via a second model, a second natural language sequence representing a response to the first natural language sequence; and
evaluating, via a third model, a quality of at least one of the first natural language sequence or the second natural language sequence based on one or more criterion, the one or more criterion including at least one of consistence, clearness, conversation flow, conciseness, completeness, closure, correctness, or relevance; and

(ii) providing the second response as an input into an optimization function, and wherein the optimization function generates another response associated with the geographical information and based at least in part on the enriched prompt.

13. One or more computer storage media having computer-executable instructions embodied thereon that, when executed, by one or more processors, cause the one or more processors to perform operations comprising:

receiving (903) a natural language question or command associated with a mapping platform;

in response (905) to the receiving of the natural language question or command associated with the mapping platform, extracting contextual data, the contextual data including at least one of: user information generated prior to the receiving of the natural language question or command, one or more spatial or temporal constraints within the natural language question or command, or context from an output generated by one or more language models;

based (907) at least in part on the extracting of the contextual data, generating a response; and

causing (911) presentation, at a user device, of an indication associated with the response.

14. The one or more computer storage media of claim 13, wherein the response is indicative of an enriched prompt that includes at least a portion of: the natural language question or command and the contextual data, and wherein the operations further comprising:

providing the enriched prompt as second input into one or more language models, and wherein the one or more language models generate a second response to the enriched prompt; and

providing the second response as an input into an optimization function, and wherein the optimization function generates a third response associated with the geographical information and based at least in part on the enriched prompt.

15. The one or more storage media of claim 13, wherein the contextual data includes the context from an output generated by one or more language models, and wherein the output includes a clarifying question that the one or more language models generate in response to a prior turn in the question or command or a prior question or prior command issued by a user before to the question or command.

FIG. 1

EP 4 641 408 A1

FIG. 2

EP 4 641 408 A1

**Conversation History:** ["I want to travel from Chennai to Delhi what are my options", **"I would like to see some *Indian* restaurants in SF"**]

LANGUAGE MODEL REQUEST

CONVERSATION HISTORY `306`

→ EXTRACT USER INFORMATION `311`

→ INCREMENTAL UPDATE USER INFORMATION `313`

**Current Conversation:** ["Show me a nice route from SF to LA", **"And some good restaurants to stop at"**]

CURRENT CONVERSATION `304`

CURRENT QUERY `302`

USER INFORMATION KEY-VALUE PAIR DATA STRUCTURE: `315`

```
{
    "cuisine" :  ["Indian"],
    "music":   ["null"],
    "drink":   ["null"],
    ...
}
```

*FIG. 3*

LANGUAGE MODEL REQUEST

EXTRACT CONTEXTUAL DATA FROM CURRENT QUERY `317`

→ ENRICH CURRENT QUERY WITH RELEVANT CONTEXTUAL DATA `319`

→ ENRICHED QUERY/ PROMPT `310`

• **Enriched Query:** Show me a route from SF to LA with some *Indian* restaurants to stop at in-between

EP 4 641 408 A1

400

**LANGUAGE MODEL PROMPT/RESPONSE**
**406**

**OPTIMIZATION FUNCTION(S)**
**420**

402
INPUT QUERY: FASTEST ROUTE FROM A TO B STOPPING IN BETWEEN AT C, D, E

404
EXTRACT ENTITIES FROM QUERY

408
SOURCE (A)

410
DESTINATION (B)

412
WAYPOINTS (C, D, E)

414
TEMPORAL CONSTRAINT

416
TRAVEL MODE

418
OPTIMIZATION OBJECTIVE (TIME, DISTANCE, ETC.)

422
GET TOP K BEST ROUTES BETWEEN SOURCE AND DESTINATION

424
LOCAL SEARCH FRO WAYPOINT ENTITY CANDIDATES NEAR ROUTE SEGMENTS

426
FIND OPTIMAL CANDIDATE COMBINATIONS AND ROUTE

412
WAYPOINTS

414
FILTER AND SORT CANDIDATE WAYPOINTS BY THE WAYPOINT'S DISTANCE TO THE NEAREST POINT IN THE ROUTE

426
FIND OPTIMAL CANDIDATE COMBINATIONS AND ROUTE

416
SELECT A COMBINATION OF WAYPOINTS AND CALCULATE THE ROUTING DISTANCE

NO

418
EARLY STOP?

YES

420
OUTPUT RESULT: OPTIMAL WAYPOINT ENTITIES AND OPTIMAL ROUTE

*FIG. 4*

500

**503** SCENARIO GENERATOR

**505**
**Location:** Tokyo, Ueno
**Scenario:** A traveler trying to find the best route to Akihabara, he is a backpacker, so want to find the cheapest route.

**530**

**507** USER BOT

**509**
Hi GeoExpert, please find me a route to Akihabara

**511**
Where are you? And do you have any preference for the route?

GENERATE CONVERSATIONS

**513**
Ueno, I want to find the cheapest route.

**515** AGENT BOT

**517**
To go from Ueno to Akihabara, you can take the blue line...

**519** EVALUATOR BOT

**521**

0 0.5 1 1.5 2 2.5 3

*FIG. 5*

FIG. 6

EP 4 641 408 A1

*FIG. 7*

800

GENERATE A SCENARIO — 802

GENERATE, VIA A USER BOT, AND AS PART OF A CONVERSATION, A $1^{ST}$ NATURAL LANGUAGE QUESTION OR COMMAND — 804

GENERATE, VIA AN AGENT BOT, AND AS PART OF THE CONVERSATION, A $1^{ST}$ RESPONSE TO THE $1^{ST}$ NATURAL LANGUAGE QUESTION OR COMMAND — 806

GENERATE, VIA THE USER BOT, AND AS PART OF THE CONVERSATION, A $2^{ND}$ NATURAL LANGUAGE QUESTION OR COMMAND IN RESPONSE TO THE $1^{ST}$ RESPONSE TO THE $1^{ST}$ NATURAL LANGUAGE QUESTION OR COMMAND — 808

GENERATE, VIA THE AGENT AND AS PART OF THE CONVERSATION, A $2^{ND}$ RESPONSE TO THE $2^{ND}$ NATURAL IMAGE QUESTION OR COMMAND — 810

EVALUATE, VIA AN EVALUATOR BOT, THE CONVERSATION ACCORDING TO CRITERIA — 812

ADJUST PROMPT(S) — 816

CRITERIA MEET THRESHOLD(S) — 814

NO

YES

STOP

*FIG. 8*

900

RECEIVE AN INDICATION OF A NATURAL LANGUAGE
QUESTION OR COMMAND CORRESPONDING TO A
REQUEST TO OBTAIN GEOGRAPHICAL INFORMATION
ASSOCIATED WITH A MAPPING PLATFORM
~903

EXTRACT CONTEXTUAL DATA
~905

PROVIDE THE CONTEXTUAL DATA AND THE NATURAL
LANGUAGE QUESTION OR COMMAND AS INPUT INTO
LANGUAGE MODEL(S), WHEREIN THE LANGUAGE MODEL(S)
GENERATE A RESPONSE
~907

CAUSE PRESENTATION OF AN INDICATION ASSOCIATED
WITH THE RESPONSE AND THE MAPPING PLATFORM
~911

*FIG. 9*

*FIG. 10*

EP 4 641 408 A1

MEMORY

12

PROCESSOR(S)

14

PRESENTATION
COMPONENT(S)

16

RADIO(S)

24

I/O PORT(S)

18

I/O COMPONENTS

20

POWER SUPPLY

22

11

10

*FIG. 11*

| | Europäisches Patentamt European Patent Office Office européen des brevets | **EUROPEAN SEARCH REPORT** | **Application Number** EP 25 17 0916 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 892 828 A (QINGDAO INST OF SURVEYING AND MAPPING SURVEY ET AL.) 16 April 2024 (2024-04-16) * of machine translation; pages 2,9,10 * | 1-15 | INV. G06F16/9032 G06F16/9537 G06F16/29 |

TECHNICAL FIELDS SEARCHED (IPC)

G06F

The present search report has been drawn up for all claims

| Place of search | Date of completion of the search | Examiner |
|---|---|---|
| The Hague | 17 July 2025 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 0916

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | Publication date | Patent family member(s) | Publication date |
|---|---|---|---|
| CN 117892828 A | 16-04-2024 | NONE | |

For more details about this annex : see Official Journal of the European Patent Office, No. 12/82

EPO FORM P0459